(19) Europäisches Patentamt
European Patent Office
Office européen des brevets

(11) **EP 4 081 741 B1**

(12) **EUROPEAN PATENT SPECIFICATION**

(45) Date of publication and mention
of the grant of the patent:
**09.04.2025  Bulletin 2025/15**

(21) Application number: **21750113.9**

(22) Date of filing: **03.02.2021**

(51) International Patent Classification (IPC):
*F24F 11/00* (2018.01)     *F24F 11/30* (2018.01)
*F24F 11/56* (2018.01)     *F24F 110/10* (2018.01)
*F24F 110/20* (2018.01)     *F24F 110/40* (2018.01)

(52) Cooperative Patent Classification (CPC):
**F24F 11/70; F24F 11/56; F24F 11/58;**
F24F 2110/10; F24F 2110/20; F24F 2110/40;
G01K 2201/00; Y02B 30/70

(86) International application number:
**PCT/US2021/016372**

(87) International publication number:
**WO 2021/158630 (12.08.2021 Gazette 2021/32)**

(54) **AIRSTREAM SENSOR DEVICES, SYSTEMS AND METHODS**

LUFTSTROMSENSOREN, -SYSTEME UND -VERFAHREN

DISPOSITIFS DE CAPTEURS DE COURANTS D'AIR, SYSTÈMES ET PROCÉDÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **03.02.2020  US 202062969374 P**

(43) Date of publication of application:
**02.11.2022  Bulletin 2022/44**

(73) Proprietors:
• **Ebtron, Inc.**
  **Loris, SC 29569 (US)**
• **Urbaniak, Michael J.**
  **Little River, SC 29566 (US)**
• **Dougan, David S.**
  **N. Myrtle Beach, SC 29582 (US)**
• **Deangelis, Darryl W.**
  **Longmeadow, MA 01106 (US)**

(72) Inventors:
• **URBANIAK, Michael J.**
  **Little River, South Carolina  29566 (US)**
• **DOUGAN, David S.**
  **Myrtle Beach, South Carolina 29582 (US)**
• **DEANGELIS, Darryl W.**
  **Longmeadow, Massachusetts 01106 (US)**

(74) Representative: **AWA Denmark A/S**
**Strandgade 56**
**1401 Copenhagen K (DK)**

(56) References cited:
US-A1- 2007 137 318      US-A1- 2009 064 803
US-A1- 2010 088 044      US-A1- 2019 017 717
US-A1- 2019 017 717      US-A1- 2019 309 975
US-A1- 2019 309 975      US-A1- 2019 391 052
US-B1- 6 543 932

**Description**

BACKGROUND

Statement of the Technical Field

The present document relates to sensor devices and systems. More particularly, the present document relates to sensor devices, implementing systems and methods for measuring parameters associated with an airstream passing through air conveyance structure (e.g., a duct, a plenum space, or other location in a heating, ventilating and air conditioning (HVAC) system).

Description of the Related Art

It is estimated that more than one third of current global energy consumption is used to maintain indoor environments, for example, via HVAC systems. Any improvements in the efficiency and control of HVAC systems have the potential to reduce the overall use of energy. Manufacturers of HVAC systems and components seek ways to provide consumers with controlled, energy efficient systems without having to compromise the indoor air quality and/or the comfort of building occupants. US 2019/017717 Al discloses a system for measuring parameters associated with an airstream passing through a duct or HVAC system;

One area in which energy savings can be realized is by utilizing outside air to cool or heat the interior of a building or structure, which allows air conditioning compressor(s) and/or heating elements to be powered off. For example, some HVAC controls utilize data from temperature sensor devices to determine when to heat or cool an indoor space using outside air, by basing the decision on whether the temperature of the outside air is higher or lower than the temperature of the inside air. This type of determination can be problematic; however, as making decisions based on temperature alone may result in discomfort to building occupants when the outside air used to heat or cool the occupied space is too humid.

Accurately controlling outdoor air ventilation and exhaust airflows are necessary for building pressurization. It is the difference of these airflows (pressurization flow) that maintains the pressurization within a building or space. Proper building pressurization is needed to prevent unfiltered and unconditioned air from entering buildings. Negatively pressurized buildings or spaces can lead to health problems either by contaminates in the outdoor air or within the building envelope. Additionally, energy use may increase and comfort problems may arise if the outdoor air is not properly conditioned by the HVAC equipment. In humid climates, a significant amount of moisture can be brought into a building, potentially resulting in condensation, which may create conditions that facilitate cause mold growth.

When designing HVAC systems and calculating loads, engineers often use software incorporating psychrometric formulas. Verification of calculations and proper system operation can be quickly made in the field with constants based on standardized air conditions. However, as the density changes, these constants become invalidated.

Other HVAC controls utilize data transmitted from separate humidity and temperature sensor devices when making decisions on whether to cool an indoor space using outside air, which may result in inefficient use of equipment, physical space, and electrical controls. Furthermore, the data collected by the separate sensor devices may be inconsistent and/or skewed, since the locations positions of the separate devices throughout the HVAC system varies, and is not been optimized for accuracy and/or repeatability. Moreover, existing systems often collect data from humidity sensors mounted on duct walls, which may fail to capture data associated with the bulk of the airstream.

Generally, airflow, temperature, humidity, and dew point information is required to efficiently operate HVAC equipment. Enthalpy is calculated using temperature and humidity using the following mathematical equation (1).

$$H = (0.24 \text{ x } T) + [W \text{ x } (1061 + 0.444 \text{ x } T)] \tag{1}$$

where H = enthalpy (Btu/lb), T = dry-bulb temperature (°F), and W = specific humidity (lbwater / lbdry air).

Stand-alone sensors are ordinarily used to determine the airflow rate, temperature, and humidity measurements. Airflow measurement devices include single or multi-point airflow measurement devices, such as differential pressure pitot tubes or piezo rings, thermal airflow sensors or vortex shedding sensors. In some cases, thermal airflow sensors provide a temperature signal, since temperature measurement if required for the determination of the airflow rate. Temperature measurement is typically obtained using a single-point sensor (unless provided with a thermal airflow sensor) or using an averaging "serpentine" temperature sensor probe that has multiple temperature sensors in series. Humidity is typically measured using a single-point sensor.

Typical measurement technology is relatively bulky, requiring multiple sensors, redundant power connections, and redundant signal connections. Redundant signal connections are most troublesome when the devices use a network connection to a host building automation system (BAS) or application controller (AC), as disruptions in such network can potentially impact the ability to gain measurements. Additionally, temperature measurement accuracy may be limited in many HVAC applications using typical technology, as a result of velocity and temperature measurement profiles that cannot be addressed using modern temperature and humidity technologies, and thus, temperature measurement error can be significant. For example, measurement uncertainty from pure arithmetic averaging in an air stream may, in certain cases, be such as illustrated in Table A below. The actual temperature must be "weighted" for the variations in air velocity.

**Table A**

| Weighted temperature is calculated as follows: $\sum_{i=1}$ to $n(V_i \times T_i) / n$ Where: V= point velocity (FPM or SFPM) T= point temperature (°F) | | | | | | | |
|---|---|---|---|---|---|---|---|
| Arithmetic vs. Weighted Temperature Example Measurement Location: Mixed Air Stream | | | | | | | |
| Velocity Profile (FPM) | | | | Temperature Profile (°F) | | | |
| 1646 | 1431 | 1418 | 1426 | 82.4 | 81.1 | 80.3 | 80.4 |
| 1184 | 1195 | 1217 | 1024 | 70.6 | 69.9 | 69.8 | 68.0 |
| 783 | 561 | 685 | 788 | 60.3 | 59.9 | 60.1 | 61.9 |
| 519 | 445 | 358 | 460 | 49.8 | 49.9 | 51.0 | 49.7 |
| Arithmetic Average: 65.3 °F Weighted (true) Average: 70.1 °F Difference: 4.8 °F | | | | | | | |

Temperature measurement error may have a significant effect on enthalpy calculations, since the true average temperature is required to accurately determine enthalpy. Systems with an airside economizer (free cooling system) often require enthalpy measurements in order to properly switch to and from free cooling mode, i.e., the switchover point. Systems that use enthalpy switchover require enthalpy measurement in the following airstreams, depending on the switchover method selected.

• Return and outdoor air stream
• Mixed air stream (location where outdoor air and return air come together)
• Outdoor airstream

When enthalpy is measured in just one of these air streams, significant error can result from temperature measurement uncertainty. In most applications, enthalpy switchover is desired but is not ultimately used as a result of measurement error (which may sometimes be misdiagnosed as a limitation of the humidity sensor).

SUMMARY

The present invention relates to a system according to claim 1 and a method according to claim 19.
In those or other scenarios, the corrected airflow rate equates to mass flow rate. The mass flow rate is used to determine an amount of heat transfer of a heat exchanger in the HVAC system. The amount of heat transfer is used to optimize performance of the HVAC system.
The implementing systems of the above described methods can include, but are not limited to, a processor and a non-transitory computer-readable storage medium comprising programming instructions that are configured to cause the processor to implement the above described methods.
In some scenarios, the implementing systems comprise airstream sensor device(s) configured to be disposed in an air flow conveyance structure of an HVAC system. The air stream sensor device(s) can include, but are not limited to, a probe, a pilot tube, a damper, a flow capture hood, a thermal meter, a vortex shedder, or a measuring louver. The airstream sensor(s) comprise(s): a housing comprising an elongate hollow shaft configured to extend between a first inner wall of the air flow conveyance structure and an opposing second inner wall of the air flow conveyance structure; a plurality of openings formed in the elongate hollow shaft so as to be spaced apart along the elongate length of the housing; and a plurality of sensors (e.g., a bead-in-glass thermistor) respectively disposed in the plurality of openings formed in the elongate hollow shaft of the housing, and configured to measure a temperature, an airflow, and a relative humidity of an airstream within a single cross-sectional plane of the air flow conveyance structure. The systems also comprise: at least one absolute pressure sensor configured to measure a barometric pressure of an atmosphere outside of the air flow conveyance structure; and a transmitter communicatively coupled to the at least one airstream sensor device and the absolute pressure sensor. The transmitter is configured to: receive humidity measured values and temperature measured values from the at least one airstream sensor device and barometric pressure values from the at least one absolute pressure sensor; compute a velocity weighted temperature value for the airstream based on the temperature measured values, wherein the velocity weighted temperature value accounts for variations in the airstream's velocity within the single cross-sectional plane at a plurality of different locations in the air flow conveyance structure; use the humidity measured values, the velocity weighted temperature value, the velocity weighted humidity value, and/or the barometric pressure values to determine a psychrometric property associated with the airstream and to correct calculated airflow volumetric rate (e.g., when the density is different than standardized conditions); and cause operations of the HVAC system to be controlled based on the determined psychrometric property (e.g., an enthalpy value, a dew point value, and/or a density) and corrected airflow volumetric rate. For example, at least one parameter of the HVAC system is adjusted based on the determined psychrometric property

In some scenarios, the absolute pressure sensor(s) is(are) in operative communication with a geolocation device. The geolocation device can include, but is not limited to, at least one of a global positioning satellite (GPS) receiver, an internet protocol (IP) address, and a lookup table.

In those or other scenarios, at least one first airstream sensor device is disposed upstream in the airstream of a heat transfer portion of the HVAC system, and at least one second airstream sensor is disposed downstream in the airstream of the heat transfer portion of the HVAC system, thereby determining the energy inputted or removed. The first and/or second airstream sensor device is(are) configured to, in cooperation with the transmitter, determine at least one performance characteristic of the heat transfer portion of the HVAC system.

In those other scenarios, at least one first airstream sensor device is disposed upstream in the airstream of the HVAC system, and at least one second airstream sensor is disposed in a second airstream converging and mixing with the airstream of the HVAC system of the heat transfer portion of the HVAC system. The first and/or second airstream sensor device(s) is(are) configured to, in cooperation with the transmitter, to determine the energy balance of mixture processes of the airstream of the HVAC system and the second airstream.

In those or other scenarios, the transmitter is further configured to: communicate at least one of the humidity measured values, the temperature measured values, the velocity weighted temperature value, the barometric pressure, density, dew point, and the enthalpy value to an external device; compute a velocity weighted humidity value and a velocity weighted enthalpy value for the airstream based on the humidity measured values; and/or receive airflow measured values from airstream sensor devices including the at least one airstream sensor device, and determine at least two airflow velocity values based on the airflow measured values. At least two airflow velocity values may be used to compute the velocity weighted temperature value in addition to the temperature measured values.

In those or other scenarios, the airstream sensor device comprises a relative humidity sensor that is disposed proximate a center point of the housing. The airstream sensor device may comprise multiple relative humidity sensors. The housing may be an elongated probe housing comprising a first end and a second end. The sensors of the airstream sensor device may be spaced apart at equal distances between the first end and the second end.

BRIEF DESCRIPTION OF THE DRAWINGS

The present solution will be described with reference to the following drawing figures, in which like numerals represent like items throughout the figures.

FIG. 1 is a block diagram of an illustrative airstream sensor device and system.

FIG. 2 is a schematic illustration of an airstream sensor device.

FIGS. 3A-5E provide sectional views of HVAC ducts having airstream sensor devices disposed therein.

FIG. 6 provides a block diagram of an exemplary method of measuring airstream parameters using an airstream sensor device.

FIG. 7 provides a block diagram of an exemplary method of monitoring airstream parameters using an airstream sensor device.

FIG. 8 provides a schematic representation of a graphical display of an airstream sensor device and system.

FIG. 9 provides a schematic representation of a graphical display of an airstream sensor device and system.

FIGS. 10-13 provide illustrations that are useful for understanding a velocity-weighed temperature.

FIGS. 14-16 provide illustrations that are useful for understanding a velocity-weighed enthalpy.

DETAILED DESCRIPTION

As used in this document, the singular forms "a," "an," and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to."

An "electronic device" or a "computing device" refers to a device that includes a processor and memory. Each device may have its own processor and/or memory, or the processor and/or memory may be shared with other devices as in a virtual machine or container arrangement. The memory will contain or receive programming instructions that, when executed by the processor, cause the electronic device to perform one or more operations according to the programming instructions.

The terms "memory," "memory device," "data store," "data storage facility" and the like each refer to a non-transitory device on which computer-readable data, programming instructions or both are stored. Except where specifically stated otherwise, the terms "memory," "memory device," "data store," "data storage facility" and the like are intended to include single device embodiments, embodiments in which multiple memory devices together or collectively store a set of data or instructions, as well as individual sectors within such devices.

The terms "processor" and "processing device" refer to a hardware component of an electronic device that is configured to execute programming instructions. Except where specifically stated otherwise, the singular term "processor" or "processing device" is intended to include both single-processing device embodiments and embodiments in which multiple processing devices together or collectively perform a process.

The term "transmitter" refers to a physical computing device including one or more processors and memory. The transmitter can utilize software in combination with hardware and/or firmware for implementing various features and/or performing various aspects of the airstream sensor devices and/or systems described herein.

The terms "resistance sensor" and "resistor sensor" refer to a sensor in which the resistance increases or decreases in response to changes in temperature. The change in resistance can be measured via a resistance sensing circuit in which the resistance sensor is disposed, connected, and/or in electrical communication with. Similarly, the terms "capacitance sensor" or "capacitor sensor" refer to a sensor in which the capacitance increases or decreases in response to changes in the surrounding moisture level or humidity. The changes in capacitance can be measured via a capacitance sensing circuit in which the capacitance sensor is disposed, connected, and/or in electrical communication with.

Relative terms such as "below" or "above" or "upper" or "lower" or "horizontal" or "vertical" may be used herein to describe a relationship of one element, feature, member, or component to another element, feature, member, or component as illustrated in the figures. It is understood that these terms are intended to encompass different orientations of the device in addition to the orientation depicted in the figures. Like numbers refer to like elements in the figures.

In this document, when terms such as "first" and "second" are used to modify a noun, such use is simply intended to distinguish one item from another, and is not intended to require a sequential order unless specifically stated. In addition, terms of relative position such as "vertical" and "horizontal", or "front" and "rear", when used, are intended to be relative to each other and need not be absolute, and only refer to one possible position of the device associated with those terms depending on the device's orientation.

The present document concerns airstream devices, implementing systems and methods are which address limitations of conventional systems such as those discussed above. A need exists for improved airstream sensor devices, systems, and methods having a single point of control and employing multiple, different types of sensors for collecting multiple data points at various locations in an airstream. Such devices, systems, and methods can employ a combination of one or more temperature sensors, humidity sensors, and/or thermal dispersion airflow sensors for assuring that minimum ventilation requirements are met. A need also exists for improved airstream devices, systems, and related methods that incorporate correction factors on a real time basis using barometric pressure, airflow, temperature to make automatic calculations without the need for correction factors, eliminating potential errors, and potentially enhancing performance and/or efficiencies.

In the present solution, airflow measurement technology, temperature measurement technology, pressure sensor technology, and humidity measurement technology are combined into a single package, thus simplifying installation and wiring. The value of enthalpy is an important psychrometric entity, because when it is combined with mass flow, the total heat energy transferred can be determined. Thereby the power of an energy exchanger such as a cooling coil or energy wheel can be determined when the before and after ($\Delta H$) conditions are known, and knowing the relative humidity and ambient barometric pressure for the geographic location, the specific humidity (humidity ratio) may be calculated, which allows for enthalpy to be determined. Enthalpy measurement is required for many air handling units (AHU) that use one or more airside economizers (known as "free cooling") to determine the switchover point from substantially total mechanical cooling to a modulating economizer mode.

The barometric pressure sensing technology employed by the present solution is different than the differential pressure sensor technology used in conventional systems. The differential pressure measured in the conventional systems is different than the barometric pressure of a surrounding environment. In this regard, it should be understood that the differential pressure is a difference of two pressure measurements in the conveyance structure made at a same time. In contrast, the barometric pressure is an atmospheric pressure measured outside of the airflow conveyance structure at a given point time. The barometric pressure is advantageously used in the present solution to determine a density of a surrounding atmosphere and calculate a mass air flow. The mass air flow is then used to determine an amount of heat transfer of a heat exchanger in the HVAC system. The determined amount of heat transfer is then used to optimize performance of HVAC system. For example, the amount of outside air being passed to an interior are of a building to dilute an indoor environment is accurately and optimally controlled based on the mass air flow calculation. Dilution of the indoor environment can result in the removal of contaminants from inside the building. Additionally or alternatively, a temperature parameter of an area can be more efficiently or effectively reached based on the mass air flow calculation to reduce an amount of time it takes to heat/cool an indoor area as compared to that of conventional systems which do not consider the density of a surrounding atmosphere.

Generally, airflow, temperature, humidity, and dew point information is required to efficiently operate HVAC equipment. The value of enthalpy is an important psychrometric entity, because when it is combined with mass flow, the total heat energy transferred can be determined. Thereby the power of an energy exchanger such as a cooling coil or energy wheel can be determined when the before and after ($\Delta H$) conditions are known, and knowing the relative humidity and barometric pressure, the specific humidity (humidity ratio) may be calculated, which allows for enthalpy to be determined. More specifically, the provision of a temperature, and humidity sensor, together with a barometric sensor allows for automatic calculation of density, and also, for specific psychometric calculations to be automatically adjusted.

Implementations of the present disclosure comprise airstream devices, implementing systems and methods that include automatically implementing the measuring of the barometric pressure at an altitude using logic system without user interface. Additionally, implementations of the present disclosure comprise airstream devices, implementing systems and methods that include automatically implementing the measuring of the barometric pressure at an altitude using a geolocation determination by global positioning satellite (GPS) receiver, internet protocol (IP) address, and/or a lookup table. Upon the barometric pressure at elevation being measured, the altitude value can be determined using the following mathematical equation (2).

$$h = \frac{\left(\left(\frac{P_0}{P}\right)^{\frac{1}{5.257}} - 1\right) \times (T)}{0.0065} \tag{2}$$

where h = altitude above sea level (m), $P_0$ = pressure at sea level (mbar), P = pressure reading at elevation (mbar), and T = temperature at elevation (°K).

If real time barometric pressure, airflow and temperature are available, then automatic calculations could be made without the need for correction factors, thereby potentially eliminating potential errors. Thus, the present solution can comprise: an airstream sensor integrated with a transmitter including one or more onboard barometric or absolute pressure sensors that enable the determination of various combinations or psychrometric calculations for use as operating information and/or as control parameters for HVAC systems; multiple airstream sensors integrated with a transmitter including an onboard absolute pressure sensor that, upon being placed in two or more sets in a single airstream on either side of a heat transfer device (such as a heat exchanger) enables the performance of the heat transfer device to be measured, i.e., the airstream sensor working in concert act as a heat transfer device energy meter; and/or multiple airstream sensors integrated with a transmitter including an onboard absolute pressure sensor that, upon being placed in two or more sets in converging airstreams are capable of determining the energy balance of mixture processes of such converging airstreams.

The present solution is an improvement over existing devices, as multiple, different types of airstream measurement sensor devices (including temperature sensors, thermal dispersion airflow sensors, pressure sensors, and relative humidity sensors) can be co-located in a single device for improved multi-point airstream sampling, air density, and psychrometric calculations. The different types of airstream measurement sensors can be positioned in co-planar locations spanning a width, length, and/or height a plenum space or duct for more consistent air sampling and averaging. Notably, the devices, systems, and methods herein comprise multiple point thermal dispersion airflow, temperature, and humidity sensors in single airflow measurement device, including but not limited to a probe.

In some scenarios, the present solution include a system comprising a thermal airflow measurement sensor and a temperature sensor, wherein the system is used to determine the airflow rate of the thermal measurement device and is used with a humidity sensor and pressure sensor to determine air density and psychrometric calculations. In those or other scenarios, the present solution includes a system comprising a thermal airflow measurement sensor and a temperature sensor, which uses airstream humidity measurement values, airstream velocity weighted temperature value, and barometric pressure to determine a psychrometric property associated with the airstream, such as an enthalpy value, a dew point value and/or a density value. In those or other scenarios, the present solution includes a system comprising an absolute pressure sensor that detects and output barometric pressure for use in determining a psychrometric property associated with an airstream, such as an enthalpy value, a dew point value and/or a density value, wherein the absolute pressure sensor is in operative communication with a geolocation device including at least one of a global positioning satellite (GPS) receiver, an internet protocol (IP) address, and a lookup table.

In those or other scenarios, the present solution includes thermistors to determine the airflow rate and temperature of a thermal airflow measurement device, a pressure sensor, and any of a number of types of humidity sensor, and a further implementation includes a thermal airflow measurement device and a specific humidity sensor such as sold by EBTRON, INC. of Loris, South Carolina USA. In those or other scenarios, the present solution uses multi-point airflow and measurement device to determine the airflow and temperature of multiple points in an array, spaced either for equal area distribution or any other distribution to determine the velocity-weighted temperature, a pressure sensor, and any of a number of types of humidity sensor. This allows the use of velocity weighted temperature to determine air density and psychrometric calculations. Additionally or alternatively, the present solution uses an array of temperature sensors to improve the humidity measurement using velocity-weighted humidity. Alternatively, adding humidity sensors can increase accuracy in humidity measurement when airstreams are not well mixed or converging airstreams of different humidity ratios exist.

In those or other scenarios, multiple humidity sensors are co-located on a single device with one or more temperature and thermal dispersion airflow sensors, which improves the accuracy and performance of the sensor devices and systems. The data from the co-located temperature and humidity sensors is used to estimate the enthalpy of the airstream. A transmitter can transmit the airflow, temperature, humidity, and psychrometric data to an acquiring source (e.g., a controller, a reader, a server, a building management system, etc.) for making decisions.

Further, the present solution can involve electrically communicating data from multiple sensors to a single processing point that receives the sensor data, processes the sensor data, and transmits various airstream parameters calculated using the sensor data to various acquiring entities that implement HVAC control, monitoring, and/or management. The airstream parameters can include, but are not limited to, airstream airflow, temperature, relative humidity, dew point, air density, and/or enthalpy used for HVAC control, monitoring, and/or management. By virtue of the versatile mounting options associated with the devices and systems described herein, the sensor devices and respective sensors can be placed in challenging field locations for obtaining consistent measurements of the airstreams in such locations.

Further implementations of the present solution can measure and transmit individual data for various discrete multi-point sensors or a true average of the multi-point sensors. Implementations of the devices herein may utilize high quality, stable, and durable sensor technology, not limited to hermetically sealed "bead-in-glass" thermistors for measuring temperature and airflow. The thermistors are factory calibrated and be less subject to drift. Without having to perform periodic field calibration, maintenance and labor costs can be reduced and operational consistency enhanced. Direct measurement is generally a more stable method of control and reduces wear and stress on other components.

Adding humidity and pressure measurement to an airflow station or measurement device facilitates the airflow, temperature, humidity and calculation of density, dew point, and enthalpy to be obtained or processed and transmitted by a single device. The airflow, temperature, humidity and calculation of density, dew point, and enthalpy may be transmitted from a first device (e.g., a processing device) to a second device. Data from multiple devices can be used to determine the power of heat transfer energy of heat exchangers to the airstream or air mixtures. The temperature measurement obtained from the airflow station or measurement device may be individual temperature for one or more points in an airstream, an average temperature of multiple points in an airstream, or velocity-weighted temperature. Velocity-weighted temperature takes into account the velocity at the temperature measurement point compared to the others so that the temperature measurement can be weighted by the flow amount.

In some scenarios, an airstream sensor device is provided. The airstream sensor device comprises a housing and a plurality of sensors disposed on the housing. The plurality of sensors comprise at least one temperature sensor, at least one thermal dispersion airflow sensor, and at least one relative humidity sensor configured to detect the respective temperature, airflow, and relative humidity of an airstream. More than one relative humidity sensor may be disposed over the housing, and the sensors form a sensor array. The plurality of sensors detect electrical signals that are associated with and that can be correlated to airstream parameters, including the airstream temperature, airflow velocity, relative humidity, dew point, and enthalpy.

The housing may be elongated and have first end and second ends. The first and second ends can be mounted to surfaces of a duct or a plenum space in an HVAC system. The parameters obtained via the devices described herein can be used to implement HVAC system control, management, or monitoring.

The temperature and thermal dispersion airflow sensors may form a pair of thermistors comprising first and second thermistors. The first thermistor is configured to measure changes in resistance associated with the airstream temperature. The second thermistor may be heated to a temperature above the airstream temperature for measuring changes in resistance associated with the airstream airflow.

The relative humidity sensor can comprise a resistance or capacitive sensor configured to detect humidity. The sensor can comprise a polymeric humidity-sensing film in some instances. More than one relative humidity sensor can be disposed in a single sensor device. One or more relative humidity sensors can optionally be disposed proximate a center point of the housing. Additionally, one or more relative humidity sensors can be optionally disposed proximate the first or second ends of the housing. The sensors can be spaced apart at equal or unequal distances between the first and second ends of the housing.

In some scenarios, an airstream sensing system is provided. The system comprises an airstream sensor device and a transmitter. The transmitter is in electrical communication with the device, and is configured to receive and process electrical signals communicated by the device. The transmitter contains an absolute pressure sensor used to determine changes in barometric pressure or altitude. The transmitter can output a calculated temperature, a calculated airflow velocity, a relative humidity value, a calculated enthalpy of the airstream, a calculated dew point, and/or combinations thereof. The calculated values can be transmitted simultaneously or not.

The plurality of sensors comprise at least one pair of thermistors configured to change resistance in response to an airstream passing over the device and at least one relative humidity sensor configured to change capacitance in response to the airstream passing over the device. The system further comprises a transmitter electrically connected to the airstream sensor device. The transmitter is configured to calculate a psychrometric properties of the airstream using a signal indicative of the change in resistance of the thermistors and a signal indicative of the change in capacitance of the relative humidity sensor, and an absolute pressure sensor. The transmitter and airstream device can be integrally formed as a single assembly, or the transmitter can be remotely disposed relative to the airstream device in an HVAC system.

In certain scenarios, the transmitter receives signals from a plurality of airstream sensor devices. The airstream sensor devices can in certain implementations comprise a length of between 0.6 inches and 16 feet. The airstream sensor devices can comprise between three and sixteen sensors. Multiple pairs of thermistors and multiple relative humidity sensors can be provided on or over a single airstream sensor device. The airstream sensor devices can be positioned in an HVAC system, for example, being located in one or more ducts, plenum spaces, or any other location in an HVAC system not inconsistent with the subject matter herein.

In further aspects, an illustrative method of measuring airstream parameters is disclosed. The method comprises receiving, at a transmitter, a plurality of electrical signals from an airstream sensor device positioned in an airstream. The electrical signals are indicative of a temperature, a thermal dispersion airflow, and a relative humidity of the airstream. The method can further comprise processing the electrical signals to obtain a calculated temperature, a calculated airflow, dew point, and an enthalpy of the airstream and transmitting the calculated temperature, the calculated airflow, the calculated dew point, and the enthalpy to an acquirer. The method can further comprise displaying the temperature, airflow, dew point, and enthalpy values on a display screen of the transmitter.

The present solution can be implemented in software in combination with hardware and/or firmware. For example, the present solution can be implemented in software executed by a processor. In one exemplary implementation, the subject matter described herein can be implemented using a non-transitory computer readable medium having stored thereon computer executable instructions, that when executed by the processor of a computer, control the computer to perform steps. Computer readable media suitable for implementing the subject matter described herein can include, but is not limited to, non-transitory computer-readable media, such as disk memory devices, chip memory devices, programmable logic devices, and application specific integrated circuits. In addition, a computer readable medium that implements the present solution may be located on a single device or the computing platform or may be distributed across multiple devices or computing platforms.

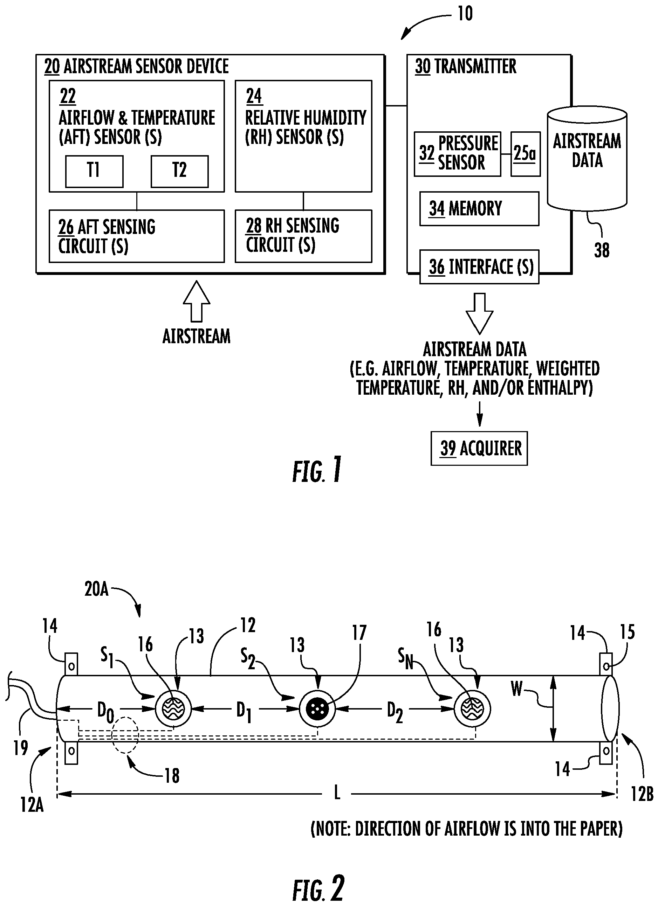

Referring now to FIG. 1, there is provided a block diagram of an airstream sensor system **10**. Briefly, the airstream sensor system **10** comprises, consists, and/or consists essentially of at least one airstream sensor device **20** and at least one transmitter **30**.

Pursuant to the present disclosure, a humidity sensor is combined with an air flow measurement device (e.g., a thermal probe) in a single, integrated device. This allow for simplified enthalpy measurement and velocity and/or air flow mass flow rate measurements by locating air flow, temperature and humidity substantially at the same location or locations within and air flow. Such can be particularly useful in relatively large cross-sectional flow environments, since in such environments, there can be variations in temperature, humidity, and the proportion of air, or mass flow, rates across the air flow profile. Thus, when attempting to measure humidity or enthalpy, taking a single point measurement of temperature, or a multiple point average of temperature, does not truly accurately the average temperature of such air flow. Positioning of multiple such devices of the present disclosure can alleviate this problem and allow for velocity-weighted mass flow, temperature, humidity, and enthalpy measurements to be accurately taken. Velocity-weighted temperature and humidity is desirable, since accurate velocity-weighted temperature and velocity-weighted humidity measurements facilitate a more accurate estimate of enthalpies. A device of the present disclosure thus allows for the generation of velocity-weighted temperature profiles, humidity profiles, mass flow rate profiles, and enthalpy profiles across an air flow.

In the present solution, a measured relative humidity value is used to calculate a humidity ratio and a dew point. Since relative humidity is dependent on temperature, it is important to have not only accurate temperature measurement (e.g., via a bead in glass sensor) but also to take the temperature measurement close to relative humidity measurement value (within same cross-sectional plane). Additionally, a humidity ratio and barometric pressure is used to calculate enthalpy. A velocity weighted temperature is used to calculated velocity weighted enthalpy and a velocity weighted relative humidity.

The barometric pressure and measured velocity is used to calculate actual volumetric airflow (ACFM). Accuracy of a sensor is based on wind tunnel calibration at standardized conditions. When density changes, the measured value needs to be corrected to bring it back to standard airflow. Previously this type of correction could be made by entering a correction value or elevation value into the system. When corrections are not incorporated, the measured airflow is incorrect and operation of HVAC system is incorrect. By adding barometric sensing, an automatic correction is provided for any elevation change. That could be on a mountain or in a skyscraper. The following tables show illustrative elevation atmospheric pressure, density and airflow in a plurality of geographic locations.

## Elevation Atmospheric Pressure

| Altitude (ft) | Pressure (psia) | Density (lbm/ft³) | World City | State / Country | Population (000,000) |
|---|---|---|---|---|---|
| Sea Level | 14.696 | 0.075 | | | |
| 750 | 14.302 | 0.073 | Charlotte | NC | 872 |
| 1500 | 13.917 | 0.071 | Munich | DE | 1,475 |
| 2250 | 13.540 | 0.069 | Edmonton | AB | 981 |
| 3000 | 13.171 | 0.067 | Billings | MT | 110 |
| 3750 | 12.811 | 0.065 | El Paso | TX | 683 |
| 4500 | 12.458 | 0.064 | Reno | NV | 249 |
| 5250 | 12.114 | 0.062 | Denver | CO | 716 |
| 6000 | 11.777 | 0.060 | Colo Sprgs | CO | 465 |
| 6750 | 11.448 | 0.058 | Loja | EC | 180 |
| 7350 | 11.190 | 0.057 | Mexico City | MX | 8,851 |
| 8250 | 10.812 | 0.055 | Addis Ababa | ET | 4,793 |
| 8500 | 10.709 | 0.055 | Bogota | CO | 8,080 |
| 9350 | 10.364 | 0.053 | Quinto | EC | 2,239 |
| 10000 | 10.107 | 0.052 | Huancayo | PE | 425 |
| 11250 | 9.626 | 0.049 | Cusco | PE | 358 |
| 12000 | 9.346 | 0.048 | La Paz | BO | 845 |
| 13600 | 8.772 | 0.045 | El Alto | BO | 1,185 |

# Elevation Atmospheric Pressure

| Altitude (ft) | Pressure (psia) | Airflow (acfm) | World City | State / Country | Population (000,000) |
|---|---|---|---|---|---|
| Sea Level | 14.696 | 100 | | | |
| 750 | 14.302 | 97 | Charlotte | NC | 872 |
| 1500 | 13.917 | 95 | Munich | DE | 1,475 |
| 2250 | 13.540 | 92 | Edmonton | AB | 981 |
| 3000 | 13.171 | 90 | Billings | MT | 110 |
| 3750 | 12.811 | 87 | El Paso | TX | 683 |
| 4500 | 12.458 | 85 | Reno | NV | 249 |
| 5250 | 12.114 | 82 | Denver | CO | 716 |
| 6000 | 11.777 | 80 | Colo. Sprgs | CO | 465 |
| 6750 | 11.448 | 78 | Loja | EC | 180 |
| 7350 | 11.190 | 76 | Mexico City | MX | 8,851 |
| 8250 | 10.812 | 74 | Addis Ababa | ET | 4,793 |
| 8500 | 10.709 | 73 | Bogota | CO | 8,080 |
| 9350 | 10.364 | 71 | Quinto | EC | 2,239 |
| 10000 | 10.107 | 69 | Huancayo | PE | 425 |
| 11250 | 9.626 | 66 | Cusco | PE | 358 |
| 12000 | 9.346 | 64 | La Paz | BO | 845 |
| 13600 | 8.772 | 60 | El Alto | BO | 1,185 |

The following TABLE shows an impact on relative humidity by an accurate temperature measurement and an impact of elevation or weather change in enthalpy.

| Description | Barometric Pressure (in Hg) | Atmospheric Pressure (psai) | Dry Bulb (°F) | Wet Bulb (°F) | Relative Humidity (%) | Humidity Ratio (gr/lb) | Specific Volume (cu.ft/lb) | Enthalpy (Btu/lb) | Dew Point (°F) |
|---|---|---|---|---|---|---|---|---|---|
| Base condition | 29.92 | 14.696 | 75 | 63.0 | 51.6 | 67.071 | 13.681 | 28.485 | 56 |
| -1°F same HR | 29.92 | 14.696 | 74 | 62.7 | 53.4 | 67.071 | 13.656 | 28.241 | 56 |
| +1°F same HR | 29.92 | 14.696 | 76 | 63.3 | 49.9 | 67.071 | 13.707 | 28.729 | 56 |
| Low Pres Rainy Day | 29.40 | 14.44 | 75 | 62.9 | 51.6 | 68.258 | 13.928 | 28.673 | 56 |

(continued)

| Description | Barometric Pressure (in Hg) | Atmospheric Pressure (psai) | Dry Bulb (°F) | Wet Bulb (°F) | Relative Humidity (%) | Humidity Ratio (gr/lb) | Specific Volume (cu.ft/lb) | Enthalpy (Btu/lb) | Dew Point (°F) |
|---|---|---|---|---|---|---|---|---|---|
| Hi Pres Rainy Day | 30.20 | 14.833 | 75 | 63.0 | 51.6 | 66.422 | 13.553 | 28.383 | 56 |
| 1000 ft Elv | 28.86 | 14.173 | 75 | 62.8 | 51.6 | 69.566 | 14.195 | 28.879 | 56 |
| 2500 ft Elv | 27.32 | 13.416 | 75 | 62.6 | 51.6 | 73.555 | 15.009 | 29.509 | 56 |
| 5000 ft Elv | 24.90 | 12.228 | 75 | 62.2 | 51.6 | 80.835 | 16.494 | 30.657 | 56 |

Air flows do not generally mix uniformly, meaning, the temperatures and humidities at differing positions across the air flow vary one from another as a consequence of differences in mass flow rates across the air flow, which results in different enthalpies at differing positions across the air flow. Accordingly, a single point measurements or arithmetic averages of measurements of humidity are not adequate for determining, for example, the enthalpy of such air flow. Instead, velocity (and/or mass flow), temperature, and humidity measurements should thus be taken together, simultaneously at substantially the same location in order to obtain accurate velocity-weighted enthalpy measurements for the air flow.

The devices of the present disclosure, due to the humidity sensor being collocated with the temperature/flow sensor, allow for such simultaneous measurements at substantially the same location and thus allow for obtaining accurate enthalpy measurements for the air flow.

The sensor device 20 can comprise, for example, a portable airstream measuring instrument or a semi-permanently or permanently mounted airstream measuring instrument. The sensor devices 20 can include, but are not limited to, devices having a combination of different sensors disposed thereon for collecting and/or measuring different data associated with an airstream. Such sensor devices 20 may include, but are not limited to, handheld probes, handheld tubes, pitot arrays, mounted probes, combination damper/AFMS piezo rings, pitot-static tubes, pitot-static grids, flow capture hoods, multi-point duct averaging tubes or probes, single-point thermal meters, vortex shedders, measuring dampers, measuring stations, measuring louvers, or any other airstream/airflow measuring device not inconsistent with the instant disclosure. The transmitter 30 can comprise an integrated or remote physical hardware component that electrically communicates with the one or more devices 20 for receiving, processing, and communicating the data obtained therefrom.

The airstream sensor device 20 can further define a sensor support or housing configured to support or house a plurality of different types of sensors configured to measure and obtain different types of data, such as, temperature, airflow, and relative humidity data. In some scenarios, a single sensor device 20 can comprise a plurality of sensors disposed on, over, or in the housing thereof, the plurality of sensors can comprise at least one temperature sensor, at least one thermal dispersion airflow sensor, and at least one relative humidity (RH) sensor 24 that measure the respective airstream temperature, airflow and relative humidity. The temperature and airflow sensors are collectively labeled 22, as the temperature and airflow sensors are configured as a pair of thermistors including at least a first thermistor T1 and a second thermistor T2. The first thermistor T1 is a temperature sensor used to measure the temperature or an airstream. The second thermistor T2 is heated to a known temperature and used to measure the airflow via thermal dispersion techniques, whereby changes in resistance and temperature of the thermistor are correlated to the rate of airflow or velocity of an airstream. The thermal dispersion airflow sensors and temperature sensors are collectively referred to as airflow and temperature (AFT) sensors 22. The addition of one or more RH sensors 24 to a device having AFT sensors 22 improves the consistency of the airstream measurements being obtained, which in turn improves the calculated value for temperature, enthalpy, and airflow. Thus, the system 10 can provide more efficient control of airstreams in an HVAC system.

In certain scenarios, the AFT sensors 22 include at least one pair of thermistors. For example, the AFT sensors 22 can comprise one or more pairs of bead-in-glass thermistors that exhibit changes in resistance in response to an airstream passing over the device 20. The one or more RH sensors 24 are configured to exhibit changes in resistance, capacitance, or conductivity in response to the airstream passing over the device 20. Any type of RH sensor 24 not inconsistent with the instant disclosure can be disposed in the devices and systems described herein, including, for example, capacitive humidity sensors, resistive humidity sensors, or thermal conductivity humidity sensors.

Further, the devices 20 described herein can comprise an array of one or more AFT sensors 22 and at least one RH sensor 24 for estimating two or more of the temperature, thermal dispersion airflow, relative humidity, and enthalpy of an airstream. In further scenarios, the devices 20 described herein can comprise an array of one or more AFT sensors 22 and at least one RH sensor 24 for estimating three or more of the temperature, thermal dispersion airflow, relative humidity, dew point, and enthalpy of an airstream. In those or other scenarios, the devices **20** described herein can comprise an array of one or more AFT sensors **22** and at least one RH sensor **24** for estimating all four of the temperature, thermal dispersion airflow, relative humidity, dew point, and enthalpy of an airstream.

More than one AFT sensor **22** and/or pair of AFT sensors may be provided per device, more than two AFT sensors **22** and/or pairs of AFT sensors may be provided per device, more than three AFT sensors **22** and/or pairs of AFT sensors may be provided per device, or less than ten AFT sensors **22** and/or pairs of AFT sensors may be provided per device. Similarly, more than one RH sensor **24** may be provided per device, more than two RH sensors **24** may be provided per device, more than three RH sensors **24** may be provided per device, or less than ten RH sensors **24** may be provided per device. Any combination of different types and quantities of RH sensors **24** and AFT sensors **22** or pairs of AFT sensors not inconsistent with the instant disclosure can be provided per device **20**.

Still referring to FIG. 1, and in some instances, the transmitter **30** is electrically connected to the airstream sensor device **20**, and can obtain and calculate data including the temperature, airflow, relative humidity, dew point, and/or enthalpy of the airstream using data received from the combined AFT sensors **22** and RH sensor(s) **24**. Previous iterations relied on input of elevation to determine equivalent barometric pressure in order to perform psychrometric calculations. The addition of an absolute pressure sensor **25** to transmitter **30** allows for automatic density and psychrometric calculations. Pressure sensor **25** is, in an exemplary implementation, capable of determining a geolocation by use of a geolocation device **25a** (which could be within, separate, or remote from transmitter **30**), such as a global positioning satellite (GPS) receiver, internet protocol (IP) address, and/or a lookup table, with pressure sensor **25** being in operative communication with one or more of such GPS receiver, IP address and lookup table.

The temperature, airflow, relative humidity, dew point, or enthalpy of the airstream can be obtained and calculated for individual points in the airstream or averaged over multiple points in the airstream. Such data can be communicated to an acquiring source or destination (i.e., technician, building manager, building automation system, controller, etc.) and used for troubleshooting the system, assessing air quality or ventilation, or making decisions to heat or cool a space via outside air based on the obtained data, among other uses. In certain scenarios, the temperature and airflow can be obtained and calculated, for example, from signals indicative of changes in resistance for AFT sensors **22** (e.g., in the pair of thermistors) and the enthalpy of the airstream can be calculated, for example, from signals indicative of the change in resistance of the AFT sensors **22** and signals indicative of the change in resistance or capacitance of the RH sensor **24**.

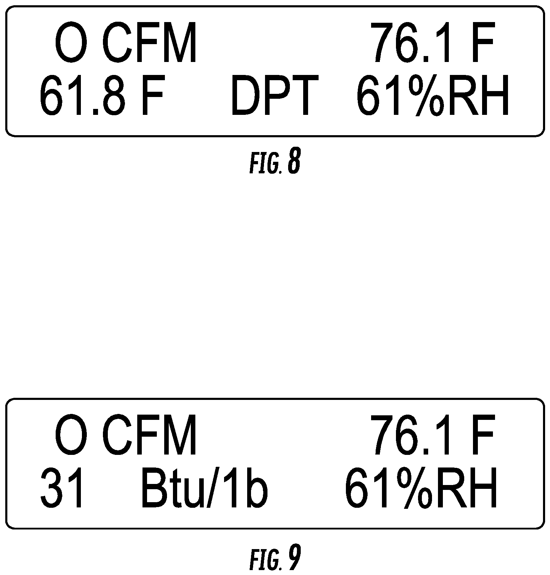

In further instances, the device **20** and transmitter **30** communicate directly with each other, for example, via a wired communication link (e.g., cable **19**, FIG. 2). For example, system 10 can comprise a "plug and play" system whereby multiple airflow sensor devices **20** can be plugged into transmitter **30** so that data can be easily acquired therefrom and sent to other entities for HVAC management and control. Alternatively, wireless communications may be used between device(s) **20** and transmitter **30**, where desired. Notably, the transmitter **30** is fully independent of the sensor devices **20** and does not require field matching. Further, a single transmitter **30** can transmit the airflow, temperature, humidity, dew point, or enthalpy data (individual data points or averaged over multiple data points) to the acquiring source for further manipulation, troubleshooting, and/or making HVAC decisions in a building or structure. The transmitter **30** can also display these values on graphical user interfaces, or displays, **30a**, **30b**, as indicated in FIGS. 8 and 9, respectively. More specifically, FIG. 8 is a schematic representation of example graphical display **30a** with an example hypothetical dew point reading of 61.8 °F for an example hypothetical airflow having a temperature of 76.1 °F and 61 percent relative humidity. Similarly, FIG. 9 is a schematic representation of example graphical display **30b** with an example hypothetical enthalpy reading of 31 BTUs per pound for an example hypothetical airflow having a temperature of 76.1 °F and 61 percent relative humidity.

As FIG. 1 further illustrates, the AFT sensor(s) **22** is/are connected to AFT sensing circuit(s) **26** and the RH sensor(s) **24** is/are connected to RH sensing circuit(s) **28**. In certain scenarios, the AFT sensing circuit **26** is a resistance-sensing circuit configured to sense, detect, and/or measure changes in the resistance of and/or between at least one pair of AFT sensors **22**. In some cases, the AFT sensors **22** include at least one pair of thermistors, in which one thermistor of the pair is a temperature sensing thermistor being heated to the temperature of the airstream and the other thermistor of the pair is a self-heated thermistor used to measure the airflow (i.e., the velocity or flow rate of the airstream) via thermal dispersion. The AFT sensing circuit **26** measures the resistance of the temperature sensing thermistor and the change in resistance between the temperature sensing thermistor and the self-heated thermistor. The AFT sensing circuit **26** then outputs the measured resistance data as a resistance sensor signal to the transmitter **30**. The transmitter **30** then calculates the airflow and temperature of the airstream based on the resistance data. The transmitter **30** can calculate the enthalpy of the airstream from the temperature and humidity data obtained from AFT and RH sensing circuits **28**. System **10** can calculate the volumetric or mass airflow, where desired.

Similarly, and in certain scenarios, the RH sensing circuit **28** is a resistance or capacitance sensing circuit configured to sense, detect, or otherwise measure the resistance or capacitance and/or changes in resistance or capacitance for the RH sensor **24** or sensors. In those or other scenarios, the RH sensing circuit **28** detects changes in the resistance or capacitance of the one or more RH sensors **24** to determine the amount of moisture present in the airstream. The RH sensing circuit **28** outputs the resistance or capacitance data as a sensor signal to the transmitter **30**. The transmitter **30** can use the signals derived from RH sensing circuit(s) **28** in combination with the signals derived from AFT sensing circuit(s) **26** and the absolute pressure sensor **25**, to calculate the enthalpy of the airstream. The temperature, thermal dispersion airflow, dew point, enthalpy, and/or relative humidity parameters are useful for managing, monitoring, troubleshooting, and/or controlling aspects of an HVAC system.

Still referring to FIG. 1, the transmitter **30** may comprise a processor **32**, memory **34**, and one or more interfaces **36**. The interfaces **26** are configured to send and receive data in the form of analog output signals, digital output signals, infrared output signals, and/or radiofrequency (RF) output signals, where desired. The transmitter **30** may send and receive any type of signal not inconsistent with the disclosed subject matter. The transmitter **30** acquires or receives data (i.e., resistance and/or capacitance sensor signals) from at least one airstream sensor device **20**, and in some scenarios, the transmitter **30** acquires or receives data from multiple devices **20**. For example and in some scenarios, a single transmitter **30** can receive and process data from between 1 and 4 devices. However, a transmitter 30 that receives and processes data from more than 4 devices is also contemplated.

The processor **32** can receive and process data from the multiple sensor devices **20**. The processor **32** can receive data in the form of signals indicative of resistance and/or capacitance changes, and process the data via executing an algorithm stored in memory **34**. The multi-point data received from one or more devices **20** is used to calculate parameters such as the average airflow, temperature, and enthalpy of an airstream or individual parameters at discrete locations in an airstream. The processor **32** can comprise a physical hardware processor including a single core or multiple cores. The processor **32** may also be a virtual processor that runs on a hypervisor layer controlling remote access to the underlying processor hardware. The processor **32** can store the airstream data in storage **38** and/or display to a display screen similar to as shown in FIGS. 8 and 9. The data can comprise airflow, temperature, relative humidity, pressure, density, dew point, and/or enthalpy data being simultaneously or substantially simultaneously acquired by an acquirer **39** such as, without limitation, an HVAC user, an HVAC technician, an HVAC controller, a building management system or unit, a building automation system, a computing platform, or manually via an RF device during installation, maintenance, and/or troubleshooting operations. Additionally, the data can optionally be displayed on a graphical user interface of the transmitter **30** or the acquiring entity, where desired.

The transmitter memory **34** may be volatile or non-volatile memory that stores instructions executed by the processor **32**. The memory **34** may be a physical memory chip or virtualized memory that is mapped to one or more physical memory chips by a hypervisor layer. In some scenarios, at least two or more of a temperature algorithm, a thermal dispersion airflow algorithm, a relative humidity algorithm, and an enthalpy algorithm are stored in the memory **34** for execution by the processor **32** to calculate the respective temperature, airflow, relative humidity, and enthalpy of an airstream from multiple points in the airstream. As noted earlier, individual temperature, airflow, or enthalpy values for each sensor in the system **10** can be calculated or averages of the airstream temperature, airflow, and enthalpy can be calculated. The temperature, airflow, and enthalpy values for various zones, devices **20**, and/or locations in an HVAC system are calculated for use in controlling or managing the system. The processor **32** can execute algorithms stored in memory **34** for computing various airstream parameters and data.

The transmitter **30** is configured to send and receive data via the one or more interfaces **36**. The temperature, airflow, RH, and/or enthalpy data may be simultaneously communicated as individual or averaged points to the acquirer **39** or acquiring entity in response to a request, an inquiry, a trigger, an alarm, according to a schedule, on-demand, or at any time and according to any method not inconsistent with the instant disclosure. The interfaces **36** can comprise one or more wired network interfaces, wireless network interfaces, RF interfaces, infrared interfaces, graphical user interfaces, touch screen interfaces, push-button interfaces, or any other type of interface not inconsistent with the instant subject matter.

The airstream data can be acquired from devices **20** directly or indirectly, and then processed into airstream data and sent to another entity (i.e., an acquirer **39**) via interfaces **36**. In some scenarios, the interfaces **36** are configured to receive electrical data (i.e., resistance or capacitance sensor signals) and then transmit the airstream parameters, simultaneously, to the acquirer **39** (e.g., a controller, user, building management system, reader, technician, computer, server, etc.). The acquirer **39** may use the airstream parameters to implement and/or effect management and control decisions in an HVAC system. One such decision may include analyzing the airflow, temperature, relative humidity, and/or enthalpy parameters to determine whether to heat or cool a space using air supplied from the HVAC system or outside air. After computing the various airstream parameters, the transmitter **30** can send the airstream data to a remote acquiring source (e.g., HVAC controller) or a local acquiring source (e.g., handheld reading device), which may be an HVAC control or management entity, where desired.

Additionally, the airstream data calculated at transmitter **30** may be displayed to a user via a display interface of the transmitter **30**, where desired as shown in FIG. 8 and 9. It will further be appreciated that the transmitter **30** can be programmed to sound an audible alarm, emit a visible alarm, and/or transmit an alarm signal to the acquiring source when the temperature, airflow, enthalpy, and/or relative humidity measurements are outside of a specified range, exceed a specified limit, or fail to comply with any other programmed parameter consistent with the instant disclosure. The system and devices described herein are also ventilation compliant with the ASHRAE 62.2 standard.

It will be appreciated that FIG. 1 is for illustration purposes only, and that the sensor system **20** is not limited to the specific architecture depicted in the figure. Numerous modifications and adaptations can be made without departing from the instant subject matter disclosed herein.

FIG. 2 is a schematic diagram of a probe airstream sensor device, generally designated **20A**. The device **20A** comprises, consists and/or consists essentially of a housing **12** and a plurality of sensors $S_1$-$S_N$ ("N" being a whole number integer > 2) disposed on, over, and/or in the housing **12**. The device **20A** can be mounted in a duct or plenum space for obtaining various airstream parameters at individual or multiple points in an HVAC system. Any number (quantity) of sensors $S_1$-$S_N$ not inconsistent with the instant subject matter may be provided per device **20A**, and the number of sensors provided on each device **20A** can vary based on the length, width, or size of the device **20A** being used to measure an airstream. The table below contains the exemplary number or quantity of sensors $S_N$ that may be disposed on, over, and/or at least partially within the devices **20A** described herein. Notably, the devices **20A** described herein employ multiple sensors $S_1$-$S_N$ for implementing multi-point sensing technology.

| Table 1. Quantity of Sensors Per Device |
| :---: |
| 3 |
| 4 |
| 5 |
| 6 |
| 7 |
| 8 |
| 9 |
| 10 |
| 12 |
| 14 |
| 16 |
| 18 |
| 20 |
| 34 |
| 32 |
| < 65 |
| < 33 |
| < 20 |

Turning now to the device housing **12**, and in some cases, the housing **12** comprises a first end **12A** and a second end **12B** that is opposite from and/or opposes the first end. A plurality of sensor openings **13** are formed in the housing **12**, from which the sensors $S_1$-$S_N$ can at least partially protrude, extend and/or by which the sensors $S_1$-$S_N$ are retained in the housing **12**. In certain scenarios, the sensors $S_1$-$S_N$ comprise sensor inserts that are inserted, mounted, and/or retained within portions of the sensor openings **13**. Where the sensors $S_1$-$S_N$ are sensor inserts, such inserts can be retained via one or more retaining members, such as set screws, pins, hooks, clips, clamps, or any other retaining member not inconsistent with the instant subject matter. The sensors $S_1$-$S_N$ can be provided on a downstream facing side or surface of the device **20A** for facing the airstream and obtaining optimal readings. As noted in FIG. 2, the airstream being measured is directed into the paper, for example, along a z-axis.

In certain scenarios, the housing **12** comprises an elongated probe body or probe housing configured to house and/or at least partially enclose and retain the sensors $S_1$-$S_N$ therein. Alternatively, a non-elongated body is also contemplated, for example, as the devices described herein are not limited to probes, but may comprise any type of handheld or mounted airstream measurement device not inconsistent with the instant disclosure. The housing **12** can comprise any shape in a planar view, for example, an elongated tube/rod/bar/strut/shaft shape, a rectangular shape, a circular shape, a non-circular shape, a louver shape, a damper shape, or any other shape not inconsistent with the instant subject matter. The housing **12** can further comprise any sectional shape, for example, a circular sectional shape (i.e., for round ducts), a non-circular sectional shape, a square sectional shape, an oval sectional shape, a rectangular sectional shape, a symmetric sectional shape, an asymmetric sectional shape, a regular sectional shape, or an irregular sectional shape.

In some cases, the housing **12** comprises a hollow, tubular body having a conduit or aperture formed therein for encasing or enclosing various components, such as electrical circuitry components (e.g., PCBs), electrical connectors (e.g., traces, wires, interconnects, etc.), and/or communication links or components (e.g., cable(s)) for minimizing interference between such components and the airstream. The housing **12** can further comprise an aerodynamic shape and/or aerodynamic surfaces that are curved or rounded for minimizing disruptions in the airstream that may be caused as the airstream passes on, over, or through portions of the device **20A**.

As FIG. 2 further illustrates, the housing **12** can comprise a length **L** and a width **W**. The width **W** is a diameter, for example, where the housing **12** has a circular cross-sectional shape. Exemplary housing lengths **L** and widths are set forth in the tables below. The housing **12** can comprise any size and/or shape not inconsistent with the instant subject matter disclosed herein.

| Table 2. Exemplary Housing Length (L) |
| --- |
| 4 inches (in) -20 feet (ft) |
| 1-20 ft |
| 1-16 ft |
| 2-20 ft |
| 2-16 ft |
| 2-10 ft |
| 5-10 ft |
| 4 in. - 16 ft |
| 4 in. - 10 ft |
| < 20 ft |
| < 16 ft |
| < 10 ft |
| < 2 feet |

| Table 3. Exemplary Housing Width (W) in one or two directions |
| --- |
| 1 millimeter (mm) -12 inches (in) |
| 1 mm - 6 in |
| 1 mm - 2 in |
| 1 mm - 1 in |
| 5 mm - 6 in |
| 5 mm - 2 in |
| 5 mm - 1.5 in |
| 1 - 6 in |
| 1 - 2 in |
| < 12 in |
| < 6 in |
| < 2 in |

Turning now to the electrical sensing aspect of the airstream sensor devices **20A** described herein, the plurality of sensors $S_1$-$S_N$ are configured to sense, measure, and/or detect changes in electrical resistance or capacitance in response to an airstream passing over the device **20A**. The changes in electrical resistance or capacitance are used to calculate various airstream parameters associated with an airstream being measured by a device **20A**. The parameters may include, for example and without limitation, the airflow, temperature, relative humidity, and/or enthalpy of the airstream being measured. Such parameters can be used to control, manage, troubleshoot, or monitor a heating, ventilating, and air conditioning (HVAC) system. The airstream measured via sensors $S_1$-$S_N$ can comprise a supply airstream, a return airstream, or an outside airstream being supplied and/or received from an outdoor (outside) source or location.

In some instances, the distance or space between adjacent sensors can be varied per device **20A** and/or sensing application. For example, the distance between sensors may depend on the size of the duct or space in which the devices is to be located, meeting customer requirements, or applications in which more or less sensor points are needed to obtain a desired or required airstream sampling. In some scenarios, the distance between sensors may measure between about 0.5 inches (in) and 6 feet (ft), or any subrange therebetween (e.g., 0.5-12 in, 0.5-6 in, 1-36 in, 1-24 in, 1-12 in, 1-6 in, 1-2 in, etc.) depending on the size and/or shape of the device 20A. The distance between sensors may be less than about 24 inches, less than about 12 inches, less than about 6 inches, or less than about 2 inches.

Additionally, and in some scenarios, adjacent sensors $S_1$-$S_n$ in a device are spaced apart at equal distances over the housing **12**. Alternatively, adjacent sensors $S_1$-$S_N$ in a device are spaced apart at unequal distances over the housing **12**. For example, the first sensor $S_1$ can be spaced apart from the adjacent second sensor $S_2$ by a first distance $D_1$ and the second sensor $S_2$ can be spaced apart from the adjacent $N^{th}$ sensor $S_N$ by a second distance $D_2$. The respective first and second distances $D_1$, $D_2$ can be equal or unequal. Where unequal, the first and second distances $D_1$, $D_2$ can vary by about 0.5 in, 1 in, 2 in, 0.5-12 in, 1-6 in, or less than 12 in. Sensors may be spaced apart at any distance(s) over housing **12**, equal or unequal, not inconsistent with the instant subject matter. Such spacing may depend, for example and without limitation, on the size of the device **20A** or the space incorporating the device **20A** (e.g., a duct or plenum space). The distance(s) between the adjacent sensors $S_1$-$S_n$ can comprise any distance(s) not inconsistent with the instant subject matter. Although only three sensors are shown in FIG. 2 for illustration purposes only, it will be appreciated that a single device **20A** can comprise more than three sensors.

Further, the end-most sensors (i.e., sensors $S_1$, $S_N$ that are disposed proximate the ends **12A**, **12B**) may be located or disposed at any inboard distance $D_0$ relative to the respective first and second ends **12A**, **12B**. The inboard distance $D_0$ can measure between 1 and 72 in, or any other subrange therebetween (e.g., 12-72 in, 12-60 in, 6-60 in, 1-24 in, 1-12 in, 1-6 in, < 72 in, < 60 in, < 36 in, < 24 in, < 6 in, < 4 in, etc.). The inboard distance $D_0$ may vary depending on the size of the device **20A** and/or the space incorporating the device **20A** (e.g., a duct or plenum space). The inboard distance $D_0$ can comprise any distance not inconsistent with the instant subject matter. Notably, the one or more RH sensors (described in more detail below) provided for each device **20A** are not restricted to placement on, adjacent to, or at the duct wall, but can be positioned so that the sensors sample air from the bulk airstream. The RH sensors can be spaced apart from each duct wall by at least about 2 in, at least 4 in, at least 6 in, at least 12 in, at least 20 in, at least 36 in, or any distance between about 2-36 in. Such placement improves the measurements and renders the RH information obtained more consistent with other sensor readings.

The one or more of the sensor devices **20A** can be sized and/or shaped for disposal in one or more duct(s), plenum space(s), transition space(s), elbow(s), and/or any other portion of an HVAC system not inconsistent with the instant subject matter. Notably, the length L of the device **20A** can substantially correspond to an opening of a duct, the distance between opposing inner walls of a duct, or a distance between mounting surfaces in a space of an HVAC system. Mounting elements **14** are disposed at the first and/or second ends **12A**, **12B** of the device **20A** for mounting, connecting, attaching and/or securing devices **20A** to portions of the HVAC system.

The mounting elements **14** can comprise mounting brackets, plates, supports or any other type of mounting element not inconsistent with the instant application. The device **20A** may be movable or rotatable relative to portions of the mounting elements **14** before being locked or fixedly retained in a given position. Further, the mounting elements **14** may extend, retract, or slide to change size, shape, or orientation. Any size and/or shape of mounting element **14** consistent with the instant subject matter can be used. The mounting elements **14** provide versatile mounting options which allow devices **20A** and respective sensors $S_1$-$S_N$ to be placed in even the most challenging field locations for measuring the airstreams in such locations.

Device **20A** may be permanently or semi-permanently locked or fixed in a given position and location in an HVAC system via mounting elements **14** and one or more fastening members **15**. The fastening members **15** may include, without limitation, screws, nails, dowels, pins, hooks, fasteners, clips, clamps, or bolts used to secure the device **20A** to the HVAC system via locking the device **20A** within a portion of mounting element **14**. For example, the fastening members **15** can extend through portions of the device **20A**, mounting element **14**, and/or adjacent HVAC structure (e.g., an inner wall of a duct, a wall of a plenum space, etc.) to secure the device **20A** to the HVAC system.

In some cases, the housing **12** and/or mounting elements **14** can comprise or be formed from a metal or a metal alloy, such as aluminum, stainless steel, copper, or any other metal or metal alloy not inconsistent with the instant subject matter. The metal or metal alloy forming the housing **12** and/or mounting elements **14** can optionally be treated (e.g., via heat treating, anodizing, coating, passivating, chemical treating, mechanical treating, etc.) for improved stability and durability, where desired.

Each device **20A** is configured to measure at least the airflow, temperature, and relative humidity of an airstream that passes through various points and locations in the HVAC system. The measurements can be used, for example and without limitation, for outdoor air delivery monitoring, differential airflow tracking, troubleshooting, HVAC control and management, assuring compliance with ventilation requirements, system performance monitoring, or any other application not inconsistent with the instant subject matter. In some scenarios, the airflow, temperature, and relative humidity measurements are associated with a return, supply, and/or outside airstream in an HVAC system.

The sensor measurements can be used to determine the source of the supply airstream, as well as the timing and/or duration of using the source of the supply airstream. For example, the measurements can be used to determine whether the source of the supply airstream is an outside airstream or a cooled/heated airstream supplied by the HVAC system. C ooling or heating a structure via outside air for any period of time advantageously allows the respective HVAC compressor or heating elements of the HVAC system to be turned off, which can contribute to significant energy savings and improves the energy efficiency of the respective HVAC system.

Furthermore, the enthalpy values can be used to determine the total power of heat exchanged in the airstreams added or removed by heat transfer equipment. Such information can be used to determine effectiveness of the heat exchanger or for energy efficiency, and over time, could show degradation or be used to troubleshoot various operational issues.

Notably, the temperature and relative humidity measurements obtained via sensors $S_1$-$S_N$ can be used to calculate the enthalpy of the airstream passing over each device 20A for determining when to use conditioned or heated air versus outside air. The airflow measurements obtained via sensors $S_1$-$S_N$ are used to assure compliance with ventilation and air quality requirements. Making decisions, for example, in regards to whether to use HVAC air (i.e., heated or cooled supply air) or outside air based on the temperature, enthalpy and airflow measurements allows energy savings to be realized without having to compromise indoor air quality, required ventilation, and/or comfort. By increasing the amount of outdoor air used to cool a structure when the enthalpy of the outside air temperature is lower in temperature and/or enthalpy of the return air, energy and costs savings may be realized. The sensor devices 20A described herein utilize co-located and/or co-planar sensors $S_1$-$S_N$, which further improves the accuracy and repeatability of the airstream measurements being obtained.

Still referring to FIG. 2, at least some of the sensors $S_1$-$S_N$ comprise AFT sensors 16 configured to sense both the airstream temperature and the airflow of an airstream passing over the respective device 20A. The AFT sensors 16 are resistance sensors that measure/detect the resistance or changes in resistance as the airstream temperature increases or decreases. The temperature and airflow data can be calculated and determined, in part, by comparing the resistance data obtained from the AFT sensors 16 during operation to resistance data obtained during calibration of the sensors 16. In one implementation, the AFT sensors 16 can comprise thermistors that meet NIST-traceable calibration standards, which are factory calibrated for airflow ranges of 0 to 5,000 feet per minute (fpm) at sixteen calibration points and calibrated for temperature ranges of range of -20 to 160 °F and three calibration points. The AFT sensors 16 are in one implementation accurate within +/- 2% of the airstream airflow and within +/- 0.15 °F of the airstream temperature.

In some cases, the AFT sensors 16 comprise thermistors by which temperature and airflow can be calculated based on changes in resistance through a resistance sensing circuit. The AFT sensors 16 can comprise, or be formed from, hermetically sealed, bead-in-glass thermistor probes, which are accurate and relatively durable and stable at temperatures between - 20 and 160 degrees Fahrenheit (°F), or any subrange thereof, and a humidity between 0 and 100%. In some scenarios, at least one AFT sensor 16 can be a thermistor configured to measure the airstream temperature and at least one other AFT sensor 16 is a thermistor that is self-heated to a preferential temperature by a constant power for measuring airflow (i.e., an airstream velocity or flow rate). In those or other scenarios, the temperature is at least 10 degrees Fahrenheit (°F) above the airstream temperature for detecting the airflow, at least 20 °F above the airstream temperature for detecting the airflow, at least at least 50 °F above the airstream temperature for detecting the airflow, or between 10-60 °F above the airstream temperature. As the airstream velocity or flow rate increases, the temperature difference between the AFT sensors 16 decreases. The temperature difference is reflected as a difference and/or change in resistance values across the pair of AFT sensors 16. The AFT sensors 16, via a resistance-sensing circuit, will detect the changes in resistance and communicate the changes as output resistance sensor signals carried by electrically conductive circuit elements 18 and an output cable 19. The output resistance sensor signals are sent to and received by a transmitter (i.e., 30, FIG. 1).

Further, the sensors $S_1$-$S_N$ comprise at least one RH sensor 17 configured to measure the relative humidity of the airstream passing over device 20A. In some scenarios, the RH sensor is a capacitive type humidity sensor comprising a hygroscopic material, such as a polymeric humidity-sensing film, disposed between electrodes. The hygroscopic material can comprise a thermo-set polymer, a thermoplastic polymer, or any other type of material not inconsistent with the instant subject matter.

A capacitance sensing circuit is configured to detect changes in capacitance of the RH sensor 17 and determine the amount of moisture present in the airstream. The capacitance sensing circuit is configured to detect the capacitance (or changes in capacitance) of the humidity RH sensor 17 and communicate the capacitance information as one or more output capacitance sensor signals via electrically conductive circuit elements 18 and output cable 19. The output capacitance sensor signal is sent to and received by a transmitter (i.e., **30**, FIG. 1). The transmitter can utilize the signals received from the sensor device **20A** to calculate various airstream parameters, such as the temperature, airflow, and enthalpy of the airstream. The airstream parameters can be output to an acquiring entity or acquirer (i.e., **39**, FIG. 1), which may use the output for controlling, managing, and/or monitoring aspects of an HVAC system. Systems utilizing the airstream sensor devices **20A** described herein may be more energy efficient, cost efficient, spatially efficient, and may have improved comfort during heating and/or cooling for a space, whether using conditioned or outside air.

Further in regards to FIG. 2, it is noted that the first end **12A** of the housing **12** forms a proximal end that is more proximal to the output cable **19** of the device **20A** and the second end **12B** forms a distal end that is more distal to the output cable **19**. The sensors $S_1$-$S_N$ in FIG. 2 are but one illustration of the sensor locations, spatial locations, spacing distances, and sensor ordering. For example, as FIG. 2 illustrates, the AFT sensors **16** are disposed proximate the first and second ends **12A** and **12B** and the RH sensor **17** is disposed proximate a center point of the housing **12**. However, it is understood that the RH sensor **17** may also be disposed proximate the first and/or second ends **12A**, **12B** and the AFT sensors **16** may be disposed proximate the center point of the housing **12**. Further, the AFT sensors **16** may be directly adjacent to each other or directly adjacent to one or more RH sensors **17**. It is also contemplated that multiple RH sensors **17** are disposed directly adjacent to each other within the housing **12**. More than one RH sensor **17** may be provided per device **20A**, where desired. Each sensor $S_1$-$S_N$ is configured to communicate electrical data, signals, or information (e.g., resistance or capacitive sensor signals) to the output cable **19** via various circuit elements **18** comprising electrical connectors or components (e.g., traces, wires). A single output cable **19** can communicate the data received from the multiple sensors $S_1$-$S_N$ to a transmitter. The transmitter can serve as a single point of communication configured to collect all sensor signals from sensor device **20A** and transmit all outputs to a data acquisition source.

It is appreciated that FIG. 2 is for illustration purposes only, and that the sensor device **20A** is not limited to the specific architecture depicted in the figure. Numerous modifications and adaptations can be made without departing from the instant subject matter disclosed in the appended claims.

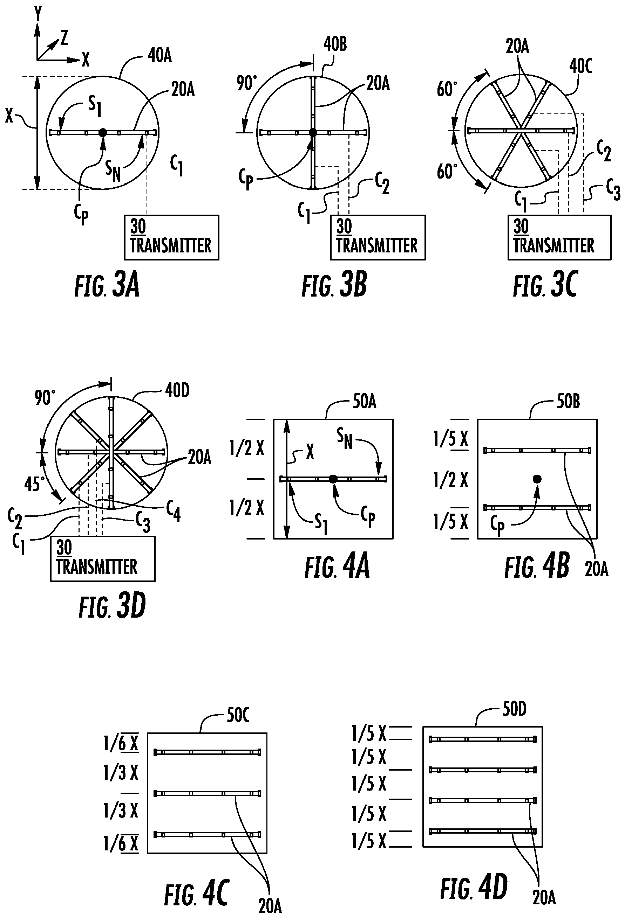

FIGS. 3A-5E are sectional views of various different sizes and/or shapes of HVAC ducts having one or more airstream sensor devices **20A** disposed therein according to embodiments of the presently disclosed subject matter. Each device **20A** can connect to a transmitter **30**. In FIGS. 3A-5E, the airstream being measured is directed into the paper along the z-axis. The sensor systems **10** and devices **20A** set forth herein can also be disposed in plenum space(s), transition space(s), elbow(s), and/or any other portion of an HVAC system not inconsistent with the disclosed subject matter.

FIGS. 3A-3D illustrate round ducts **40A-40D** that have a circular or substantially circular cross-sectional shape and FIGS. 4A-4D illustrate square ducts **50A-50D** having a squared or substantially squared cross-sectional shape. The ducts in FIGS. **3A-4D** comprise a width X in two directions, which may be a diameter where circular ducts are provided. Illustrative duct widths **X** are in the table below.

| Table 4. Exemplary Duct Diameters or Widths (X) for Square and Circular Ducts |
|---|
| 5 inches (in) - 24 feet (ft) |
| 1-20 ft |
| 1-16 ft |
| 2-20 ft |
| 2-16 ft |
| 2-10 ft |
| 5-20 ft |
| 5-10 ft |
| 5 in. - 16 ft |
| 5 in. - 10 ft |
| < 50 ft |
| < 10 ft |
| < 2 ft |

Referring now to FIGS. 3A-3D, the respective ducts **40A-40D** comprise a conduit formed between inner walls. A plurality of airstream sensor devices **20A** are positioned, mounted, attached and/or otherwise disposed between the inner walls of the respective ducts **40A-40D.** FIG. 3A illustrates a single sensor device **20A** positioned in the duct **40A** and FIGS. 3B-3D illustrate multiple devices **20A** disposed in the respective ducts. Where multiple devices **20A** are provided, each device is spaced apart from the adjacent devices along the depth of the duct, for example, in the z-direction. The multiple devices **20A** can advantageously provide, position, or locate sensors $S_1$-$S_N$ across the entire width X lengths of the duct, which improves the air sampling. Notably, the sensors $S_1$-$S_N$ of each device **20A** are disposed along a same plane in the duct, so that the temperature, airstream, and relative humidity readings are sampled from a same plane within a duct.

As FIG. 3A illustrates, the sensor device **20A** can pass through a center point $C_P$ of the duct **40A**. The device **20A** is electrically connected to a transmitter 30 via a wired or wireless communication link $C_1$. As FIG. 3B illustrates, at least two sensor devices **20A** can intersect proximate the center point $C_P$ of the duct **40B**. The sensor devices **20A** can be orthogonally disposed relative to each other within and the duct **40B** width **W**. Each **20A** is electrically connected to a single transmitter **30** via wired or wireless communication links $C_1$ and $C_2$.

As FIG. 3C illustrates, three sensor devices **20A** can intersect proximate the center point $C_P$ of the duct **40C**. The sensor devices **20A** can be acutely angled with respect to each other within the duct **40B**. Each device can radially extend from the center point $C_P$ of the duct **40C** for sampling air at locations disposed across the entire radius and diameter of the duct. Each device **20A** is electrically connected to a single transmitter **30** via wired or wireless communication links $C_1$ to $C_3$.

FIG. 3D illustrates four sensor devices **20A** disposed in a duct **40D**. The devices intersect proximate the center point $C_P$ of the duct **40D**, and portions of each device **20A** are acutely angled with respect to other devices **20A**, or portions thereof. Notably, the devices **20A** include a plurality of sensors spaced across the full width X of the duct **40D** for improved sampling. The sensor devices **20A** are symmetrically disposed relative to the center point $C_P$ of the duct **40C** so that symmetric portions or locations of the airstream in the duct **40D** are obtained. Each device **20A** is electrically connected to a single transmitter **30** via wired or wireless communication links $C_1$ to $C_4$. Having multiple devices **20A** connected to transmitter **30** is advantageous in terms of ease of manufacture, ease of installation, ease of maintenance, ease of connectivity thereto, and improved troubleshooting.

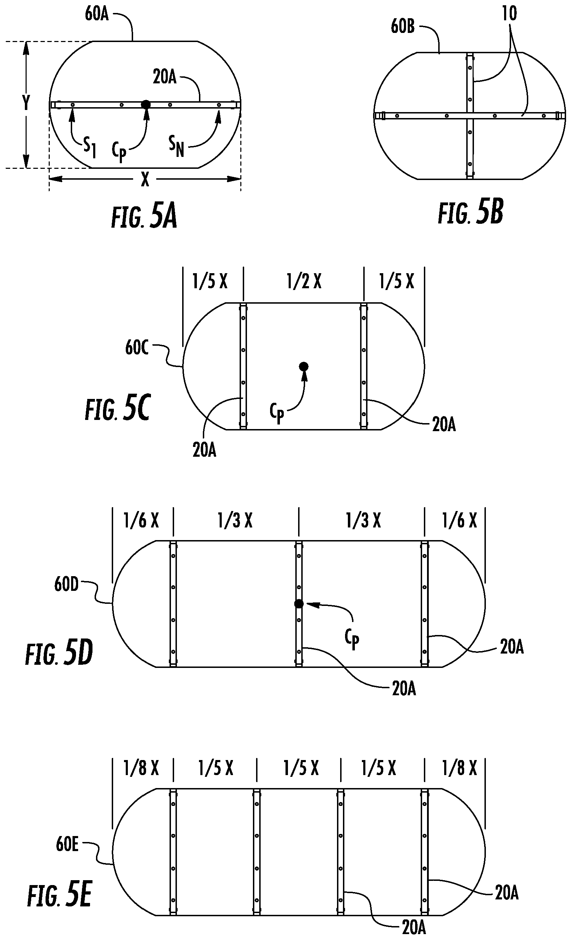

FIGS. 4A-4D illustrate airstream sensor devices **20A** disposed in square shaped ducts **50A-50D**, respectively. The sensor devices **20A** can intersect proximate the center point $C_P$ of the duct **50A** as illustrated in FIG. 4A or not intersect proximate the center point $C_P$ of the duct **50B** as illustrated in FIG. 4B. Multiple sensor devices **20A** can be symmetrically disposed relative to at least one axis of symmetry passing through the center point $C_P$ of the duct **40B** for improved, symmetric airstream sampling. Symmetric sampling can improve the monitoring and, thus, control over the HVAC system for improved energy efficiency. In FIG. 5D, the devices **20A** are symmetric about more than one axis of symmetry passing through the center point $C_P$, for example, the devices **20A** are symmetric about axes disposed along each of the x-, y-, and z-axes. The devices **20A** may be mirror and/or rotationally symmetric.

Further, in FIG. 4A a single sensor device **20A** is mounted proximate the midpoint of the duct, such that approximately one-half of the duct **40A** is above the device **20A** and approximately one-half of the duct **40B** is below the device **20A**. In FIG. 4B, the devices **20A** are mounted at various locations (i.e., heights or depths) within the duct **40B** that are proximate one-quarter of the width X away from the upper and lower faces of the duct. In FIG. 4C, the devices **20A** are positioned proximate the midpoint of the duct at heights or depths of about 1/6 the duct width X. In FIG. 4D, the devices **20A** are located at heights or depths of about 1/8 the duct width X. Where multiple devices **20A** are disposed in a duct, the devices can be vertically spaced and spaced equal distances apart and extend length-wise along substantially parallel planes within the respective duct. As FIGS. 4A-4D illustrate, the devices **20A** can be spaced apart in the y-axis at equal or unequal distances. Equal spacing of devices **20A** along the x- and z- axes is also contemplated.

FIGS. 5A-5E illustrate one or more airstream sensor devices **20A** disposed in oval shaped ducts **60A-60E**, respectively. The sensor devices **20**A can intersect at a location proximate the center point $C_P$ of the duct **60A** as illustrated in FIG. 5A or not pass through the center point $C_P$ of the duct as illustrated in FIG. 5C. The sensor devices **20A** can be symmetrically disposed about one or more axes of symmetry passing through the center point $C_P$ of the ducts for improved airstream sampling, which facilitates improved monitoring and, thus, control over the HVAC system for improved energy efficiency. The sensor devices **20A** may be spaced apart in the horizontal direction (i.e., along the x-axis) at equal or unequal distances, and each device **20A** may extend length-wise along substantially parallel planes within the ducts. The elongated axis of each sensor device **20A** can be substantially parallel to the maximum width or height Y of the duct in the y-direction. Alternatively, the sensor devices **20A** may be substantially parallel to a maximum width **X** of the duct in the x-direction. As FIGS. 5A-5E illustrate, one, two, three or four sensors **20A** may be disposed in a given duct. The sensor devices face the airstream supplied to a duct in the z-direction for improved measurements.

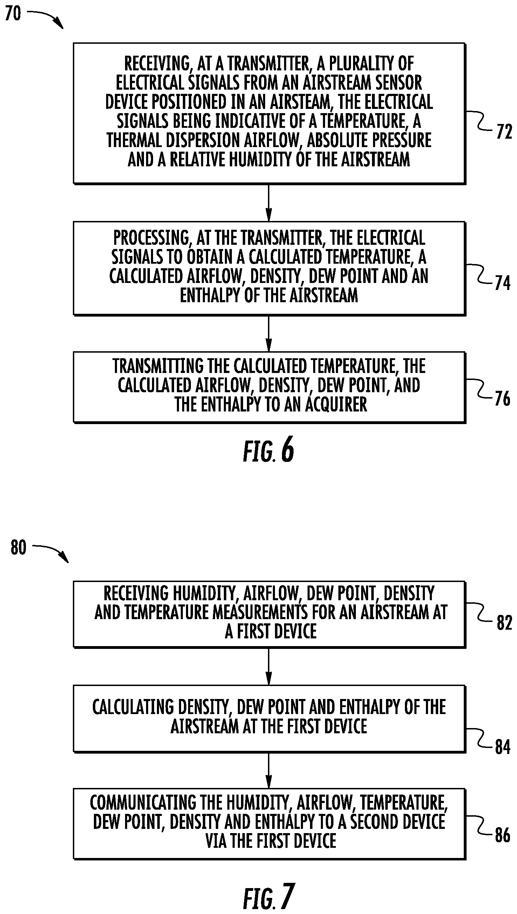

FIG. 6 is a block diagram of an exemplary method, generally designated **70**, for measuring, collecting, or detecting airstream parameters of an airstream disposed in the path of an airstream sensor device and barometric pressure according to embodiments of the presently disclosed subject matter.

At **72,** the method comprise receiving, at a transmitter, a plurality of electrical signals from an airstream sensor device positioned in an airstream, the electrical signals being indicative of a temperature, a thermal dispersion airflow, a barometric pressure, and a relative humidity of the airstream.

At **74,** the method further comprises processing, at the transmitter, the electrical signals to obtain a calculated temperature, a calculated airflow, density, dew point, and enthalpy of the airstream.

At **76,** the method further comprises transmitting the calculated temperature, the calculated airflow, density, dew point and/or the enthalpy to an acquirer. The relative humidity may also be transmitted The airflow data or parameters, including the temperature, thermal dispersion airflow velocity, relative humidity, and enthalpy can be calculated by a transmitter (30, FIG. 1) and sent to an acquiring source, destination, or entity for use in making decisions relating to HVAC system management and control.

FIG. 7 is a block diagram of an illustrative method, generally designated **80,** for monitoring an airstream according to the present solution.

At **82,** humidity, airflow, and temperature measurements for an airstream and barometric pressure are received at a first device.

At **84,** the density, dew point, and enthalpy of the airstream is calculated at the first device.

At **86,** the humidity, airflow, temperature, density, dew point and/or enthalpy are communicated to a second device via the first device.

Referring to FIG. 7, the first and second devices can comprise any device hereinabove not inconsistent with the instant disclosure. For example, and in certain scenarios, the first and second devices can comprise a transmitter and building management system device, respectively. The humidity, airflow, and temperature measurements may be received for multiple individual points, which may optionally be averaged and/or weighted prior to communication to the second device. For example, the humidity, airflow, and temperature measurements may be measured and obtained for multiple points in an airstream, averaged by the number of points, and the average values are communicated to the second device. In other aspects, individual (non-averaged) humidity, airflow, and temperature measurements are communicated to the second device. In yet further aspects, a velocity weighted temperature is calculated and communicated to the second device. Velocity weighted temperature is not merely a straight average of the temperature points, but also takes into account the velocity at the temperature measurement point compared to the others. Thus, the temperature measurement being communicated to the second device is weighted by the velocity (flow amount).

As can be seen from the foregoing disclosure, use of multiple airflow sensors with enthalpy, BTU information can be determined, which can be used to identify operational inefficiencies leading to the consumption of more energy. And, if both flow and enthalpy is measured across these devices, a measure of actual performance can be made.

In certain circumstances, a ventilation latent load may be separated from the zone load. In doing so, dedicated outside air systems may be incorporated along with sensible only or minimal latent capacity zone level cooling units. Examples of these zone units are chilled beams, sensible only terminals, and variable refrigerant flosw systems. In these cases, control of the dew point of the volume of airflow to the zones can be important to prevent condensation and excess humidity that could consequently lead to damage or mold growth. Knowing the relative humidity and the temperature, the dew point can be calculated.

Additionally, measuring and controlling the flow and the outdoor airflow and the moisture content can may be important for energy management.

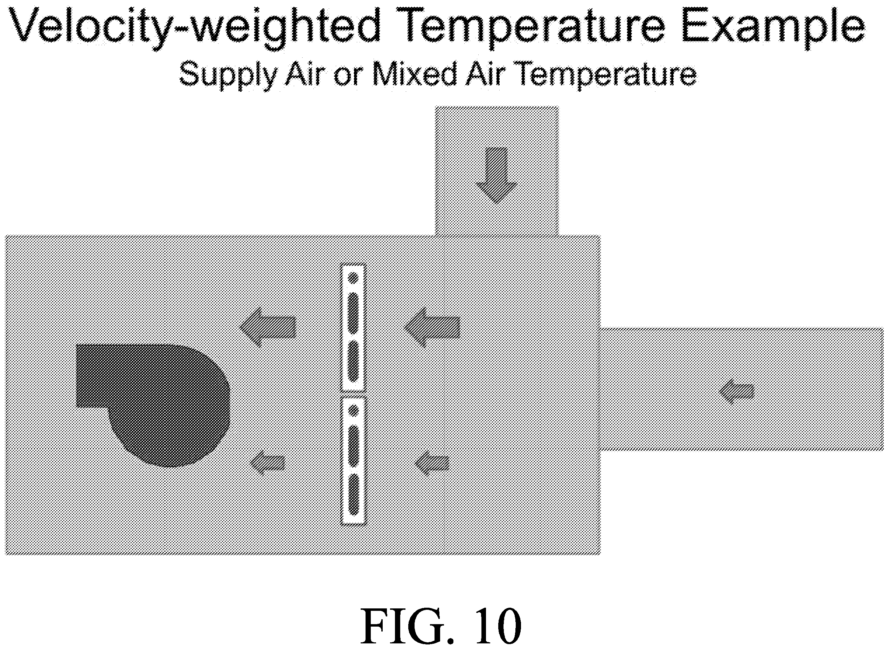

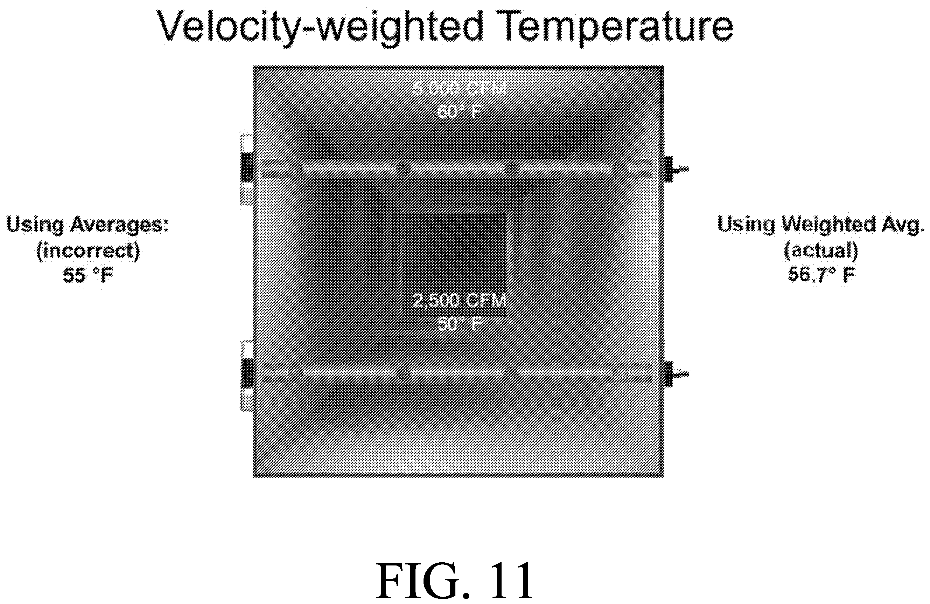

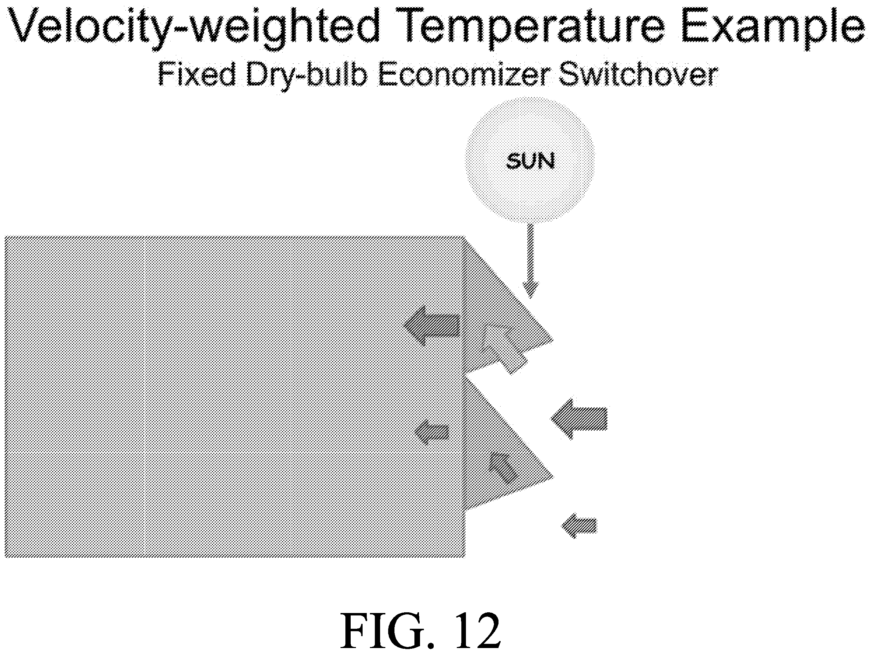

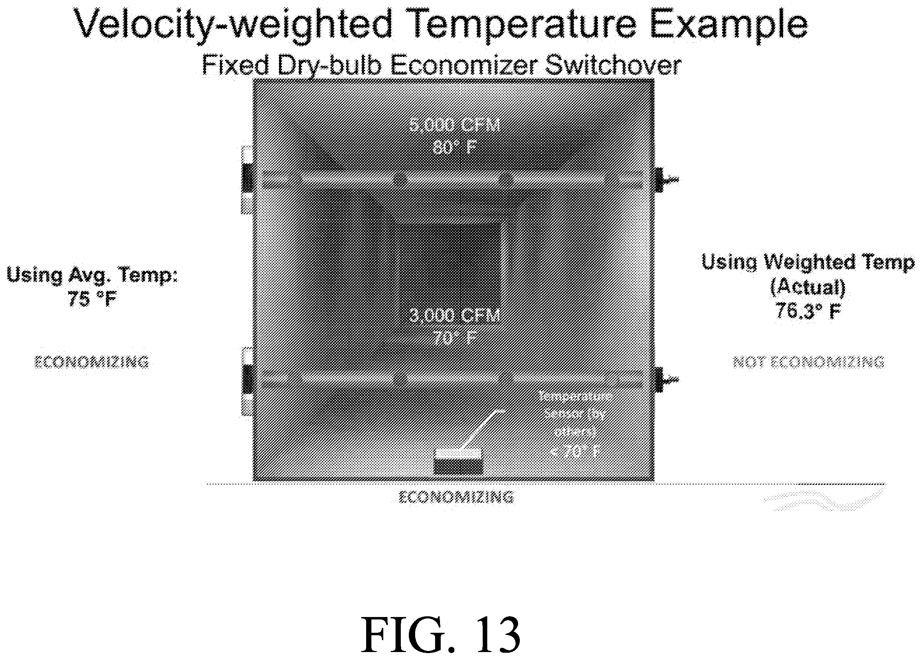

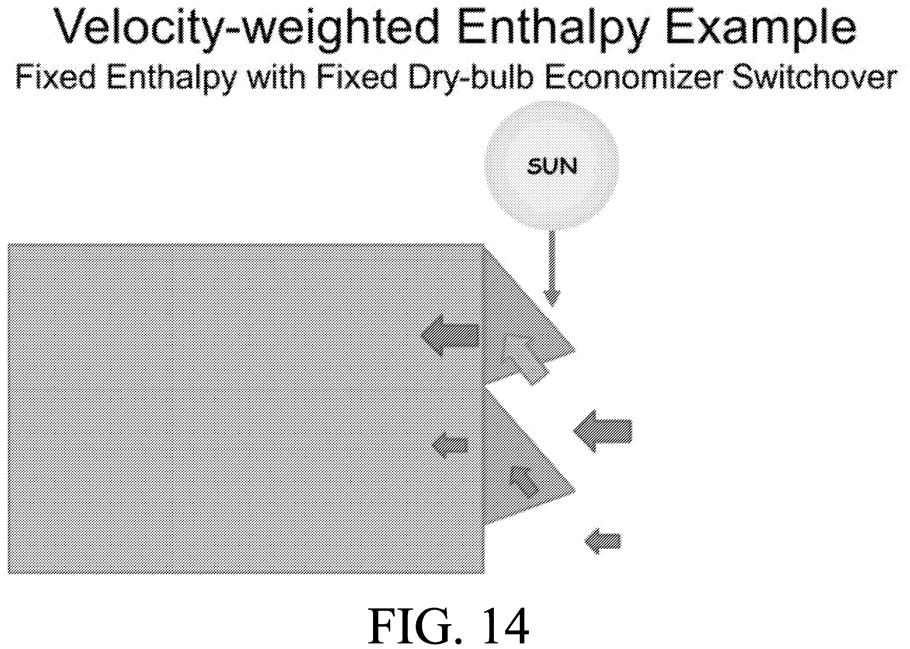

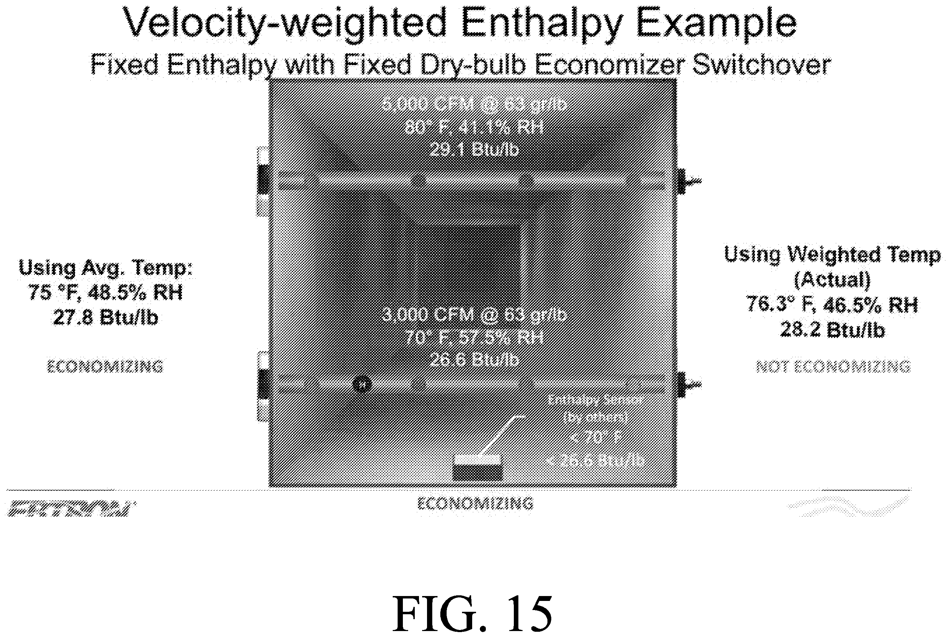

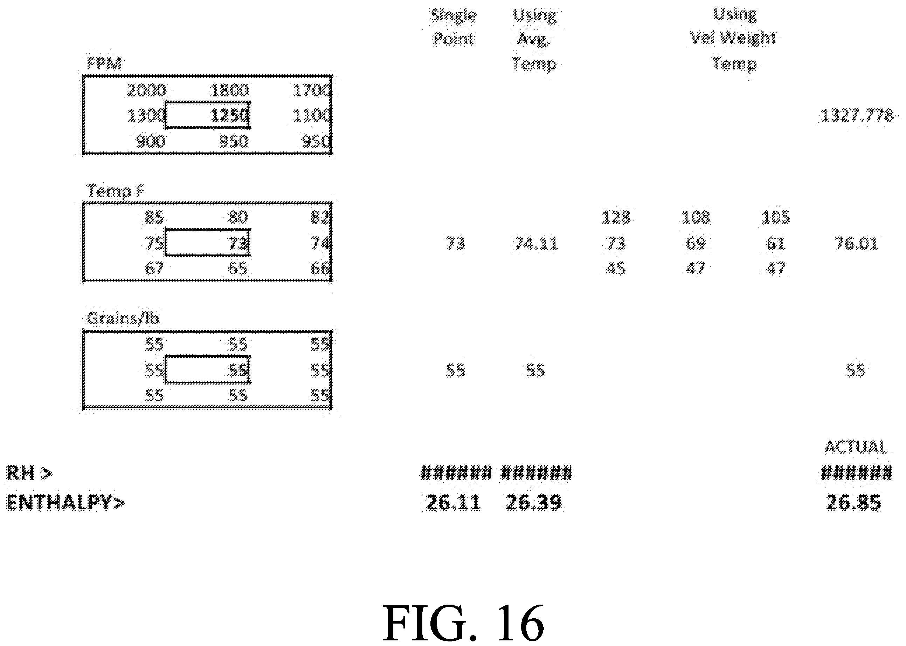

FIGS. 10-13 provide illustrations that are useful for understanding velocity-weighted temperature. FIGS. 14-16 provide illustrations that are useful for understanding velocity-weighted enthalpy. As evident from FIGS. 10-16, the present solution has advantages over the prior art solutions. For example, the present solution provides a system that measures airflow velocity more accurately as compared to the prior art systems. This improved accuracy of airflow velocity is at least partially due to: (i) the independent airflow sensor measurements in a single cross-sectional plane of an air duct; (ii) independent temperature measurements and/or independent humidity measurements in the cross-sectional plane; and (iii) the mathematical weighting of different types of measurements at a particular point in time as opposed to an averaging of a single type of measurement to determine at least one psychrometric property.

Although the present solution has been illustrated and described with respect to one or more implementations, equivalent alterations and modifications will occur to others skilled in the art upon the reading and understanding of this specification and the annexed drawings. In addition, while a particular feature of the present solution may have been disclosed with respect to only one of several implementations, such feature may be combined with one or more other features of the other implementations as may be desired and advantageous for any given or particular application. Thus, the breadth and scope of the present solution should not be limited by any of the above described embodiments. Rather, the scope of the present solution should be defined in accordance with the following claims.

## Claims

**1.** A system (10), comprising:

at least one airstream sensor device (20) configured to be disposed in an air flow conveyance structure (40A-40D, 50A-50D, 60A-60E) of a heating, ventilation and air conditioning, HVAC, system, and comprising

a housing (12) comprising an elongate hollow shaft configured to extend between a first inner wall of the air flow conveyance structure (40A-40D, 50A-50D, 60A-60E) and an opposing second inner wall of the air flow conveyance structure (40A-40D, 50A-50D, 60A-60E),

a plurality of openings (13) formed in the elongate hollow shaft so as to be spaced apart along the elongate length of the housing (12), and

a plurality of sensors ($S_1$-$S_n$) respectively disposed in the plurality of openings (13) formed in the elongate hollow shaft of the housing (12), and configured to measure a temperature, an airflow, and a relative humidity of an airstream within a single cross-sectional plane of the air flow conveyance structure (40A-40D, 50A-50D, 60A-60E), wherein the single cross sectional plane is parallel to a direction of air flow in the air flow conveyance structure (40A-40D, 50A-50D, 60A-60E);

at least one absolute pressure sensor (25) configured to measure an ambient barometric pressure of an atmosphere outside of the air flow conveyance structure (40A-40D, 50A-50D, 60A-60E); and

a transmitter (30) communicatively coupled to the at least one airstream sensor device (20) and the absolute pressure sensor (25), and configured to

receive humidity measured values, temperature measured values, and airflow rate measured values from the at least one airstream sensor device (20) and ambient barometric pressure values from the at least one absolute pressure sensor (25),

use at least the ambient barometric pressure values to determine an elevation and an air

density of a surrounding environment to correct airflow rate;

compute a velocity weighted temperature value for the airstream by weighting each of the temperature measured values by a flow amount, wherein the velocity weighted temperature value accounts for variations in the airstream's velocity within the single cross-sectional plane at a plurality of different locations in the air flow conveyance structure (40A-40D, 50A-50D, 60A-60E);

use the humidity measured values and the ambient barometric pressure values to determine current specific humidity values for the airstream within the air flow conveyance structure;

use the current specific humidity values and the velocity weighted temperature values to determine a psychrometric property associated with the airstream at a plurality of points along the single cross-sectional plane; and

cause operations of the HVAC system to be controlled based on the determined psychrometric property and the corrected airflow rate.

2. The system according to claim 1, wherein the psychrometric property comprises an enthalpy value.

3. The system according to claim 1, wherein the at least one absolute pressure sensor is in operative communication with a geolocation device (25a), the geolocation device (25a) including at least one of a global positioning satellite, GPS, receiver, an internet protocol, IP, address, and a lookup table.

4. The system according to claim 1, wherein

at least one first airstream sensor device (20) is disposed upstream in the airstream of a heat transfer portion of the HVAC system, and

at least one second airstream sensor ($S_1$-$S_n$) is disposed downstream in the airstream of the heat transfer portion of the HVAC system and configured to, in cooperation with the transmitter, determine at least one performance characteristic of the heat transfer portion of the HVAC system or to determine the energy balance of mixture processes of the airstream of the HVAC system and the second airstream.

5. The system according to claim 2, wherein the transmitter (30) is further configured to communicate at least one of the humidity measured values, the temperature measured values, the velocity weighted temperature value, the barometric pressure, density, dew point, and the enthalpy value to an external device.

6. The system according to claim 2, wherein control of the HVAC system comprises adjusting at least one parameter of the HVAC system based on the determined psychrometric property.

7. The system according to claim 1, wherein the transmitter (30) is further configured to compute a velocity weighted humidity value and a velocity weighted enthalpy value for the airstream based on the humidity measured values, and optionally wherein the psychrometric property is determined using the velocity weighted humidity value and the a velocity weighted enthalpy value in addition to the velocity weighted temperature value.

8. The system according to claim 1, wherein the transmitter (30) is further configured to receive airflow measured values from airstream sensor devices (20) including the at least one airstream sensor device (20), and determine at least two airflow velocity values based on the airflow measured values, and optionally wherein the at least two airflow velocity values are used to compute the velocity weighted temperature value in addition to the temperature measured values.

9. The system according to claim 1, wherein the at least one airstream sensor device (20) comprises a relative humidity sensor that is disposed proximate a center point of the housing (12) or multiple relative humidity sensors.

10. The system according to claim 1, wherein the housing (12) is an elongated probe housing comprising a first end and a second end, and sensors of the at least one airstream sensor device (20) are spaced apart at equal distances between the first end and the second end.

11. The system according to claim 1, wherein the plurality of sensors (22) comprise at least one bead-in-glass thermistor or at least one sensor that meets NIST-traceable calibration standards.

12. The system according to claim 1, wherein the at least one airstream sensor device (20) is a probe, a pilot tube, a damper, a flow capture hood, a thermal meter, a vortex shedder, or a measuring louver.

13. The system according to claim 1, wherein the corrected airflow rate equates to mass flow rate, optionally wherein the mass flow rate is used to determine an amount of heat transfer of a heat exchanger in the HVAC system, and optionally wherein the amount of heat transfer is used to optimize performance of the HVAC system.

14. The system (10) according to claim 1, wherein the airflow is a thermal dispersion airflow.

15. The system according to claim 1, further comprising a plurality of airstream sensor devices (20) from which the transmitter (30) is configured to receive electrical signals.

16. The system according to claim 1, wherein the transmitter (30) is configured to simultaneously output the velocity weighted temperature value, the airflow velocity values, and the psychrometric property.

17. The system according to claim 1, wherein the airstream sensor device (20) comprises between two to sixteen temperature sensors, two to sixteen thermal dispersion airflow sensor, and two to four relative humidity sensors, or wherein the airstream sensor device comprises two or more relative humidity sensors.

18. The system according to claim 1, wherein the transmitter (30) is integrated with the airstream sensor device (20) or wherein the transmitter (30) is remote from the airstream sensor device (20).

19. A method (70, 80), comprising:

measuring a humidity and a temperature by a plurality of sensors ($S_1$-$S_n$) that are (i) respectively disposed in a plurality of openings (13) formed in and spaced apart along an elongate hollow shaft of at least one air stream sensor device (20) and (ii) arranged symmetrically within a single cross-sectional plane of an air flow conveyance structure (40A-40D, 50A-50D, 60A-60E) of a Heating, Ventilation and Air Conditioning, HVAC, system, wherein the single cross sectional plane is parallel to a direction of air flow in the air flow conveyance structure (40A-40D, 50A-50D, 60A-60E); wherein the elongate hollow shaft extends between a first inner wall of the air flow conveyance structure (40A-40D, 50A-50D, 60A-60E) and an opposing second inner wall of the air flow conveyance structure (40A-40D, 50A-50D, 60A-60E);
measuring, by at least one absolute pressure sensor (25), an ambient barometric pressure of an atmosphere outside of the air flow conveyance structure (40A-40D, 50A-50D, 60A-60E);
receiving, by a transmitter (30), humidity measurement, temperature measured values, and airflow rate measured values from the at least one airstream sensor device (20) and ambient barometric pressure values from the at least one absolute pressure sensor (25),
using, by the transmitter (30), at least the ambient barometric pressure values to determine an elevation and an air density of a surrounding environment to correct airflow rate;

computing, by the transmitter (30), a velocity weighted temperature value for the airstream by weighting each of the temperature measurement values by a flow amount, where the velocity weighted temperature value accounts for variations in the airstream's velocity within the single cross-sectional plane at a plurality of different locations in the air flow conveyance structure (40A-40D, 50A-50D, 60A-60E);

using, by the transmitter (30), the humidity measurement values and the ambient barometric pressure values to determine current specific humidity values for the airstream within the air flow conveyance structure;

using, by the transmitter (30), the current specific humidity values and the velocity weighted temperature value to determine a psychrometric property at a plurality of points along the single cross-sectional plane; and

causing, by the transmitter (30), operations of the HVAC system, a building automation system or an application controller to be controlled based on the determined psychrometric property and the correct airflow rate.

20. The method (70, 80) according to claim 19, wherein the airflow is a thermal dispersion airflow.

21. The method according to claim 19, further comprising displaying the airflow velocity values, the velocity weighted temperature value, the dew point, density, and the psychrometric property on a display screen of the transmitter (30).

22. The method according to claim 19, wherein the airstream sensor device (20) is disposed in a supply airstream, a return airstream, or an outside airstream.

**Patentansprüche**

1. System (10), umfassend:

mindestens eine Luftstromsensorvorrichtung (20), die dazu ausgelegt ist, in einer Luftströmungsförderstruktur (40A-40D, 50A-50D, 60A-60E) eines Heizungs-, Lüftungs- und Klimatisierungs-, HVAC-, Systems angeordnet zu werden, und umfassend:

ein Gehäuse (12) mit einem länglichen Hohlschaft, der dazu ausgelegt ist, sich zwischen einer ersten Innenwand der Luftströmungsförderstruktur (40A-40D, 50A-50D, 60A-60E) und einer gegenüberliegenden, zweiten Innenwand der Luftströmungsförderstruktur (40A-40D, 50A-50D, 60A-60E) zu erstrecken,

eine Vielzahl von Öffnungen (13), die in dem länglichen Hohlschaft derart ausgebildet sind, dass sie entlang der Länge des Gehäuses (12) beabstandet sind, und

eine Vielzahl von Sensoren ($S_1$-$S_N$), die jeweils in der Vielzahl von Öffnungen (13) angeordnet sind, die in dem länglichen Hohlschaft des Gehäuses (12) ausgebildet sind, und dazu ausgelegt sind, eine Temperatur, einen Luftdurchsatz und eine relative Luftfeuchtigkeit eines Luftstroms innerhalb einer einzelnen Querschnittsebene der Luftströmungsförderstruktur (40A-40D, 50A-50D, 60A-60E) zu messen, wobei die einzelne Querschnittsebene parallel zu einer Luftströmungsrichtung in der Luftströmungsförderstruktur (40A-40D, 50A-50D, 60A-60E) ist;

mindestens einen Absolutdrucksensor (25), der dazu ausgelegt ist, einen Umgebungsluftdruck einer Atmosphäre außerhalb der Luftströmungsförderstruktur (40A-40D, 50A-50D, 60A-60E) zu messen; und

einen Sender (30), der kommunikativ mit der mindestens einen Luftstromsensorvorrichtung (20) und dem Absolutdrucksensor (25) gekoppelt und dazu ausgelegt ist, Luftfeuchtigkeitsmesswerte, Temperaturmesswerte und Luftdurchsatzmesswerte aus der mindestens einen Luftstromsensorvorrichtung (20) und Umgebungsluftdruckwerte aus dem mindestens einen Absolutdrucksensor (25) zu empfangen,

mindestens die Umgebungsluftdruckwerte zu verwenden, um eine Höhe und eine Luftdichte einer umgebenden Umgebung zu bestimmen, um den Luftdurchsatz zu korrigieren;

einen geschwindigkeitsgewichteten Temperaturwert für den Luftstrom zu berechnen, indem jeder der Temperaturmesswerte mit einer Strömungsmenge gewichtet wird, wobei der geschwindigkeitsgewichtete Temperaturwert Schwankungen in der Geschwindigkeit des Luftstroms innerhalb der einzelnen Querschnittsebene an einer Vielzahl verschiedener Stellen in der Luftströmungsförderstruktur (40A-40D, 50A-50D, 60A-60E) berücksichtigt;

die Luftfeuchtigkeitsmesswerte und die Umgebungsluftdruckwerte zu verwenden, um aktuelle spezifische Luftfeuchtigkeitswerte für den Luftstrom innerhalb der Luftströmungsförderstruktur zu bestimmen;

die aktuellen spezifischen Luftfeuchtigkeitswerte und die geschwindigkeitsgewichteten Temperaturwerte zu verwenden, um eine psychrometrische Eigenschaft zu bestimmen, die dem Luftstrom an einer Vielzahl von Punkten entlang der einzelnen Querschnittsebene zugeordnet ist; und

zu veranlassen, dass der Betrieb des HVAC-Systems basierend auf der bestimmten psychrometrischen Eigenschaft und dem korrigierten Luftdurchsatz gesteuert wird.

**2.** System nach Anspruch 1, wobei die psychrometrische Eigenschaft einen Enthalpiewert umfasst.

**3.** System nach Anspruch 1, wobei der mindestens eine Absolutdrucksensor in Wirkverbindung mit einer Geolokalisierungsvorrichtung (25a) steht, wobei die Geolokalisierungsvorrichtung (25a) mindestens eines von einem globalen Positionsbestimmungssatelliten-, GPS-, Empfänger, einer Internetprotokoll-, IP-, Adresse und einer Nachschlagetabelle umfasst.

**4.** System nach Anspruch 1, wobei

mindestens eine erste Luftstromsensorvorrichtung (20) stromaufwärts im Luftstrom eines Wärmeübertragungsabschnitts des HVAC-Systems angeordnet ist, und
mindestens ein zweiter Luftstromsensor ($S_1$-$S_N$) stromabwärts im Luftstrom des Wärmeübertragungsabschnitts des HVAC-Systems angeordnet und dazu ausgelegt ist, im Zusammenwirken mit dem Sender mindestens einen Leistungskennwert des Wärmeübertragungsabschnitts des HVAC-Systems zu bestimmen oder die Energiebilanz von Mischprozessen des Luftstroms des HVAC-Systems und des zweiten Luftstroms zu bestimmen.

**5.** System nach Anspruch 2, wobei der Sender (30) ferner dazu ausgelegt ist, mindestens eines von den Luftfeuchtigkeitsmesswerten, den Temperaturmesswerten, dem geschwindigkeitsgewichteten Temperaturwert, dem Luftdruck, der Dichte, dem Taupunkt und dem Enthalpienwert an eine externe Vorrichtung zu übermitteln.

**6.** System nach Anspruch 2, wobei die Steuerung des HVAC-Systems das Anpassen mindestens eines Parameters des HVAC-Systems basierend auf der bestimmten psychrometrischen Eigenschaft umfasst.

**7.** System nach Anspruch 1, wobei der Sender (30) ferner dazu ausgelegt ist, einen geschwindigkeitsgewichteten Luftfeuchtigkeitswert und einen geschwindigkeitsgewichteten Enthalpiewert für den Luftstrom basierend auf den Luftfeuchtigkeitsmesswerten zu berechnen, und wobei optional die psychrometrische Eigenschaft unter Verwendung des geschwindigkeitsgewichteten Luftfeuchtigkeitswerts und des geschwindigkeitsgewichteten Enthalpiewerts zusätzlich zu dem geschwindigkeitsgewichteten Temperaturwert bestimmt wird.

**8.** System nach Anspruch 1, wobei der Sender (30) ferner dazu ausgelegt ist, Luftstrommesswerte aus Luftstromsensorvorrichtungen (20) einschließlich der mindestens einen Luftstromsensorvorrichtung (20) zu empfangen und mindestens zwei Luftdurchsatzgeschwindigkeitswerte basierend auf den Luftstrommesswerten zu bestimmen, und wobei optional die mindestens zwei Luftdurchsatzgeschwindigkeitswerte dazu verwendet werden, den geschwindigkeitsgewichteten Temperaturwert zusätzlich zu den Temperaturmesswerten zu berechnen.

**9.** System nach Anspruch 1, wobei die mindestens eine Luftstromsensorvorrichtung (20) einen Sensor für relative Luftfeuchtigkeit umfasst, der in der Nähe eines Mittelpunkts des Gehäuses (12) oder mehrerer Sensoren für relative Luftfeuchtigkeit angeordnet ist.

**10.** System nach Anspruch 1, wobei das Gehäuse (12) ein längliches Sondengehäuse ist, das ein erstes Ende und ein zweites Ende umfasst, und Sensoren der mindestens einen Luftstromsensorvorrichtung (20) in gleichen Abständen zwischen dem ersten Ende und dem zweiten Ende beabstandet sind.

**11.** System nach Anspruch 1, wobei die Vielzahl von Sensoren (22) mindestens einen Glasperlen-Thermistor oder mindestens einen Sensor umfassen, der NIST verfolgbare Kalibrierungsstandards erfüllt.

**12.** System nach Anspruch 1, wobei die mindestens eine Luftstromsensorvorrichtung (20) eine Sonde, ein Pilotrohr, ein Dämpfer, eine Strömungserfassungshaube, ein Wärmemengenzähler, ein Wirbelableiter oder eine Messlamelle ist.

**13.** System nach Anspruch 1, wobei der korrigierte Luftdurchsatz gleich einem Massendurchsatz ist, wobei optional der Massendurchsatz verwendet wird, um eine Menge an Wärmeübertragung eines Wärmetauschers in dem HVAC-System zu bestimmen, und wobei optional die Menge an Wärmeübertragung verwendet wird, um die Leistungsfähigkeit des HVAC-Systems zu optimieren.

**14.** System (10) nach Anspruch 1, wobei der Luftstrom ein thermischer Dispersionsluftstrom ist.

**15.** System nach Anspruch 1, ferner umfassend eine Vielzahl von Luftstromsensorvorrichtungen (20), aus denen der Sender (30) dazu ausgelegt ist, elektrische Signale zu empfangen.

**EP 4 081 741 B1**

**16.** System nach Anspruch 1, wobei der Sender (30) dazu ausgelegt ist, gleichzeitig den geschwindigkeitsgewichteten Temperaturwert, die Luftdurchsatzgeschwindigkeitswerte und die psychrometrische Eigenschaft auszugeben.

**17.** System nach Anspruch 1, wobei die Luftstromsensorvorrichtung (20) zwischen zwei bis sechzehn Temperatursensoren, zwei bis sechzehn thermische Dispersionsluftstromsensoren und zwei bis vier Sensoren für relative Luftfeuchtigkeit umfasst, oder wobei die Luftstromsensorvorrichtung zwei oder mehr Sensoren für relative Luftfeuchtigkeit umfasst.

**18.** System nach Anspruch 1, wobei der Sender (30) in die Luftstromsensorvorrichtung (20) integriert ist oder wobei der Sender (30) fern von der Luftstromsensorvorrichtung (20) angeordnet ist.

**19.** Verfahren (70, 80), umfassend:

Messen einer Luftfeuchtigkeit und einer Temperatur durch eine Vielzahl von Sensoren ($S_1$-$S_N$), die (i) jeweils in einer Vielzahl von Öffnungen (13) angeordnet sind, die in einem länglichen Hohlschaft mindestens einer Luftstromsensorvorrichtung (20) ausgebildet und entlang desselben beabstandet sind, und (ii) symmetrisch innerhalb einer einzelnen Querschnittsebene einer Luftströmungsförderstruktur (40A-40D, 50A-50D, 60A-60E) eines Heizungs-, Lüftungs- und Klimatisierungs-, HVAC-, Systems angeordnet sind, wobei die einzelne Querschnittsebene parallel zu einer Luftströmungsrichtung in der Luftströmungsförderstruktur (40A-40D, 50A-50D, 60A-60E) ist;
wobei sich der längliche Hohlschaft zwischen einer ersten Innenwand der Luftströmungsförderstruktur (40A-40D, 50A-50D, 60A-60E) und einer gegenüberliegenden, zweiten Innenwand der Luftströmungsförderstruktur (40A-40D, 50A-50D, 60A-60E) erstreckt;
Messen eines Umgebungsluftdrucks einer Atmosphäre außerhalb der Luftströmungsförderstruktur (40A-40D, 50A-50D, 60A-60E) durch mindestens einen Absolutdrucksensor (25);
Empfangen von Luftfeuchtigkeitsmessung, Temperaturmesswerten und Luftdurchsatzmesswerten aus der mindestens einen Luftstromsensorvorrichtung (20) und Umgebungsluftdruckwerten aus dem mindestens einen Absolutdrucksensor (25) durch einen Sender (30),
Verwenden mindestens der Umgebungsluftdruckwerte durch den Sender (30), um eine Höhe und eine Luftdichte einer umgebenden Umgebung zu bestimmen, um den Luftdurchsatz zu korrigieren;
Berechnen eines geschwindigkeitsgewichteten Temperaturwerts für den Luftstrom durch den Sender (30), indem jeder der Temperaturmesswerte mit einer Strömungsmenge gewichtet wird, wobei der geschwindigkeitsgewichtete Temperaturwert Schwankungen in der Geschwindigkeit des Luftstroms innerhalb der einzelnen Querschnittsebene an einer Vielzahl verschiedener Stellen in der Luftströmungsförderstruktur (40A-40D, 50A-50D, 60A-60E) berücksichtigt;
Verwenden der Luftfeuchtigkeitsmesswerte und der Umgebungsluftdruckwerte durch den Sender (30), um aktuelle spezifische Luftfeuchtigkeitswerte für den Luftstrom innerhalb der Luftströmungsförderstruktur zu bestimmen;
Verwenden der aktuellen spezifischen Luftfeuchtigkeitswerte und des geschwindigkeitsgewichteten Temperaturwerts durch den Sender (30), um eine psychrometrische Eigenschaft an einer Vielzahl von Punkten entlang der einzelnen Querschnittsebene zu bestimmen; und
Veranlassen durch den Sender (30), dass der Betrieb des HVAC-Systems, eines Gebäudeautomationssystems oder einer Anwendungssteuervorrichtung basierend auf der bestimmten psychrometrischen Eigenschaft und dem korrigierten Luftdurchsatz gesteuert wird.

**20.** Verfahren (70, 80) nach Anspruch 19, wobei der Luftstrom ein thermischer Dispersionsluftstrom ist.

**21.** Verfahren nach Anspruch 19, ferner umfassend Anzeigen der Luftdurchsatzgeschwindigkeitswerte, des geschwindigkeitsgewichteten Temperaturwerts, des Taupunkts, der Dichte und der psychrometrischen Eigenschaft auf einem Anzeigebildschirm des Senders (30).

**22.** Verfahren nach Anspruch 19, wobei die Luftstromsensorvorrichtung (20) in einem Zufuhrluftstrom, einem Rückluftstrom oder einem Außenluftstrom angeordnet ist.

**Revendications**

**1.** Système (10), comprenant :

au moins un dispositif capteur de courant d'air (20) configuré pour être placé dans une structure d'acheminement de flux d'air (40A-40D, 50A-50D, 60A-60E) d'un système de chauffage, ventilation et climatisation, HVAC, et comprenant

un boîtier (12) comprenant un arbre creux allongé configuré pour s'étendre entre une première paroi intérieure de la structure d'acheminement de flux d'air (40A-40D, 50A-50D, 60A-60E) et une deuxième paroi intérieure opposée de la structure d'acheminement de flux d'air (40A-40D, 50A-50D, 60A-60E),

une pluralité d'ouvertures (13) ménagées dans l'arbre creux allongé de manière à être espacées dans le sens de la longueur allongée du boîtier (12), et

une pluralité de capteurs ($S_1$-$S_N$) respectivement placés dans la pluralité d'ouvertures (13) ménagées dans l'arbre creux allongé du boîtier (12), et configurés pour mesurer une température, un flux d'air, et une humidité relative d'un courant d'air dans un plan de coupe transversale unique de la structure d'acheminement de flux d'air (40A-40D, 50A-50D, 60A-60E), le plan de coupe transversale unique étant parallèle à une direction de flux d'air dans la structure d'acheminement de flux d'air (40A-40D, 50A-50D, 60A-60E) ;

au moins un capteur de pression absolue (25) configuré pour mesurer une pression barométrique ambiante d'une atmosphère à l'extérieur de la structure d'acheminement de flux d'air (40A-40D, 50A-50D, 60A-60E) ; et

un émetteur (30) couplé en communication à l'au moins un dispositif capteur de courant d'air (20) et au capteur de pression absolue (25), et configuré pour

recevoir des valeurs mesurées d'humidité, des valeurs mesurées de température, et des valeurs mesurées de débit d'air en provenance de l'au moins un dispositif capteur de courant d'air (20) et des valeurs de pression barométrique ambiante en provenance de l'au moins un capteur de pression absolue (25),

utiliser au moins les valeurs de pression barométrique ambiante pour déterminer une altitude et une densité d'air d'un milieu environnant afin de corriger le débit d'air ;

calculer une valeur de température pondérée par la vitesse pour le courant d'air en pondérant chacune des valeurs mesurées de température par une quantité de flux, la valeur de température pondérée par la vitesse prenant en compte les variations de la vitesse du courant d'air dans le plan de coupe transversale unique à une pluralité d'emplacements différents dans la structure d'acheminement de flux d'air (40A-40D, 50A-50D, 60A-60E) ;

utiliser les valeurs mesurées d'humidité et les valeurs de pression barométrique ambiante pour déterminer des valeurs d'humidité spécifique courantes pour le courant d'air au sein de la structure d'acheminement de flux d'air ;

utiliser les valeurs d'humidité spécifique courantes et les valeurs de température pondérées par la vitesse pour déterminer une propriété psychrométrique associée au courant d'air en une pluralité de points le long du plan de coupe transversale unique ; et

déclencher la commande du fonctionnement du système HVAC sur la base de la propriété psychrométrique déterminée et du débit d'air corrigé.

2. Système selon la revendication 1, la propriété psychrométrique comprenant une valeur d'enthalpie.

3. Système selon la revendication 1, l'au moins un capteur de pression absolue étant en communication fonctionnelle avec un dispositif de géolocalisation (25a), le dispositif de géolocalisation (25a) comportant un récepteur de satellite de positionnement mondial, GPS, et/ou une adresse de protocole Internet, IP, et/ou une table de correspondance.

4. Système selon la revendication 1,

au moins un premier dispositif capteur de courant d'air (20) étant placé en amont dans le courant d'air d'une partie de transfert de chaleur du système HVAC, et

au moins un deuxième capteur de courant d'air ($S_1$-$S_N$) étant placé en aval dans le courant d'air de la partie de transfert de chaleur du système HVAC et configuré pour, en coopération avec l'émetteur, déterminer au moins une caractéristique de performance de la partie de transfert de chaleur du système HVAC ou pour déterminer le bilan énergétique de processus de mélange du courant d'air du système HVAC et du deuxième courant d'air.

5. Système selon la revendication 2, l'émetteur (30) étant configuré en outre pour communiquer les valeurs mesurées d'humidité et/ou les valeurs mesurées de température et/ou la valeur de température pondérée par la vitesse et/ou la pression barométrique et/ou la densité et/ou le point de rosée et/ou la valeur d'enthalpie à un dispositif externe.

6. Système selon la revendication 2, la commande du système HVAC comprenant le réglage d'au moins un paramètre du système HVAC sur la base de la propriété psychrométrique déterminée.

7. Système selon la revendication 1, l'émetteur (30) étant configuré en outre pour calculer une valeur d'humidité pondérée par la vitesse et une valeur d'enthalpie pondérée par la vitesse pour le courant d'air sur la base des valeurs mesurées d'humidité et, facultativement, la propriété psychrométrique étant déterminée à l'aide de la valeur d'humidité pondérée par la vitesse et de la valeur d'enthalpie pondérée par la vitesse en plus de la valeur de température pondérée par la vitesse.

8. Système selon la revendication 1, l'émetteur (30) étant configuré en outre pour recevoir des valeurs mesurées de flux d'air en provenance de dispositifs capteurs de courant d'air (20) comportant l'au moins un dispositif capteur de courant d'air (20), et déterminer au moins deux valeurs de vitesse de flux d'air sur la base des valeurs mesurées de flux d'air et, facultativement, les au moins deux valeurs de vitesse de flux d'air servant à calculer la valeur de température pondérée par la vitesse en plus des valeurs mesurées de température.

9. Système selon la revendication 1, l'au moins un dispositif capteur de courant d'air (20) comprenant un capteur d'humidité relative qui est placé à proximité d'un point central du boîtier (12) ou de multiples capteurs d'humidité relative.

10. Système selon la revendication 1, le boîtier (12) étant une boîtier de sonde allongé comprenant une première extrémité et une deuxième extrémité, et des capteurs de l'au moins un dispositif capteur de courant d'air (20) étant espacés de manière équidistante entre la première extrémité et la deuxième extrémité.

11. Système selon la revendication 1, la pluralité de capteurs (22) comprenant au moins une thermistance à bille de verre ou au moins un capteur qui répond à des normes d'étalonnage traçables par le NIST.

12. Système selon la revendication 1, l'au moins un dispositif capteur de courant d'air (20) étant une sonde, un tube pilote, un registre, une hotte de captage de flux, un compteur thermique, un générateur de tourbillons, ou un volet à lames de mesure.

13. Système selon la revendication 1, le débit d'air corrigé représentant un débit massique, facultativement le débit massique servant à déterminer une quantité de transfert de chaleur d'un échangeur de chaleur dans le système HVAC et, facultativement, la quantité de transfert de chaleur servant à optimiser la performance du système HVAC.

14. Système (10) selon la revendication 1, le flux d'air étant un flux d'air à dispersion thermique.

15. Système selon la revendication 1, comprenant en outre une pluralité de dispositifs capteurs de courant d'air (20) en provenance desquels l'émetteur (30) est configuré pour recevoir des signaux électriques.

16. Système selon la revendication 1, l'émetteur (30) étant configuré pour délivrer simultanément la valeur de température pondérée par la vitesse, les valeurs de vitesse de flux d'air, et la propriété psychrométrique.

17. Système selon la revendication 1, le dispositif capteur de courant d'air (20) comprenant de deux à seize capteurs de température, de deux à seize capteurs de flux d'air à dispersion thermique, et de deux à quatre capteurs d'humidité relative, ou le dispositif capteur de courant d'air comprenant au moins deux capteurs d'humidité relative.

18. Système selon la revendication 1, l'émetteur (30) étant intégré au dispositif capteur de courant d'air (20) ou l'émetteur (30) étant distant du dispositif capteur de courant d'air (20).

19. Procédé (70, 80), comprenant :

la mesure d'une humidité et d'une température par une pluralité de capteurs ($S_1$-$S_N$) qui sont (i) respectivement placés dans une pluralité d'ouvertures (13) ménagées dans un arbre creux allongé d'au moins un dispositif capteur de courant d'air (20) et espacés le long de celui-ci, et (ii) agencés symétriquement dans un plan de coupe transversale unique d'une structure d'acheminement de flux d'air (40A-40D, 50A-50D, 60A-60E) d'un système de chauffage, ventilation et climatisation, HVAC, le plan de coupe transversale unique étant parallèle à une direction de flux d'air dans la structure d'acheminement de flux d'air (40A-40D, 50A-50D, 60A-60E) ;
l'arbre creux allongé s'étendant entre une première paroi intérieure de la structure d'acheminement de flux d'air (40A-40D, 50A-50D, 60A-60E) et une deuxième paroi intérieure opposée de la structure d'acheminement de flux d'air (40A-40D, 50A-50D, 60A-60E) ;
la mesure, par au moins un capteur de pression absolue (25), d'une pression barométrique ambiante d'une atmosphère à l'extérieur de la structure d'acheminement de flux d'air (40A-40D, 50A-50D, 60A-60E) ;

la réception, par un émetteur (30), d'une mesure d'humidité, de valeurs mesurées de température, et de valeurs mesurées de débit d'air en provenance de l'au moins un dispositif capteur de courant d'air (20) et de valeurs de pression barométrique ambiante en provenance de l'au moins un capteur de pression absolue (25),

l'utilisation, par l'émetteur (30), d'au moins les valeurs de pression barométrique ambiante pour déterminer une altitude et une densité d'air d'un milieu environnant afin de corriger le débit d'air ;

le calcul, par l'émetteur (30), d'une valeur de température pondérée par la vitesse pour le courant d'air par pondération de chacune des valeurs mesurées de température par une quantité de flux, la valeur de température pondérée par la vitesse prenant en compte les variations de la vitesse du courant d'air dans le plan de coupe transversale unique à une pluralité d'emplacements différents dans la structure d'acheminement de flux d'air (40A-40D, 50A-50D, 60A-60E) ;

l'utilisation, par l'émetteur (30), des valeurs mesurées d'humidité et des valeurs de pression barométrique ambiante pour déterminer des valeurs d'humidité spécifique courantes pour le courant d'air au sein de la structure d'acheminement de flux d'air ;

l'utilisation, par l'émetteur (30), des valeurs d'humidité spécifique courantes et de la valeur de température pondérée par la vitesse pour déterminer une propriété psychrométrique en une pluralité de points le long du plan de coupe transversale unique ; et

le déclenchement, par l'émetteur (30), de la commande du fonctionnement du système HVAC, d'un système immotique ou d'un contrôleur d'application sur la base de la propriété psychrométrique déterminée et du débit d'air corrigé.

20. Procédé (70, 80) selon la revendication 19, le flux d'air étant un flux d'air à dispersion thermique.

21. Procédé selon la revendication 19, comprenant en outre l'affichage des valeurs de vitesse de flux d'air, de la valeur de température pondérée par la vitesse, du point de rosée, de la densité, et de la propriété psychrométrique sur un écran d'affichage de l'émetteur (30).

22. Procédé selon la revendication 19, le dispositif capteur de courant d'air (20) étant placé dans un courant d'air soufflé, un courant d'air repris, ou un courant d'air extérieur.

FIG. 1

(NOTE: DIRECTION OF AIRFLOW IS INTO THE PAPER)

FIG. 2

FIG. 3A

FIG. 3B

FIG. 3C

FIG. 3D

FIG. 4A

FIG. 4B

FIG. 4C

FIG. 4D

60A

20A

Y

S₁  C_P  S_N

X

FIG. 5A

60B          10

FIG. 5B

1/5 X | 1/2 X | 1/5 X

60C

C_P

20A

20A

FIG. 5C

1/6 X | 1/3 X | 1/3 X | 1/6 X

60D

C_P

20A

20A

FIG. 5D

1/8 X | 1/5 X | 1/5 X | 1/5 X | 1/8 X

60E

20A

FIG. 5E

20A

70

| RECEIVING, AT A TRANSMITTER, A PLURALITY OF ELECTRICAL SIGNALS FROM AN AIRSTREAM SENSOR DEVICE POSITIONED IN AN AIRSTEAM, THE ELECTRICAL SIGNALS BEING INDICATIVE OF A TEMPERATURE, A THERMAL DISPERSION AIRFLOW, ABSOLUTE PRESSURE AND A RELATIVE HUMIDITY OF THE AIRSTREAM | 72 |

↓

| PROCESSING, AT THE TRANSMITTER, THE ELECTRICAL SIGNALS TO OBTAIN A CALCULATED TEMPERATURE, A CALCULATED AIRFLOW, DENSITY, DEW POINT AND AN ENTHALPY OF THE AIRSTREAM | 74 |

↓

| TRANSMITTING THE CALCULATED TEMPERATURE, THE CALCULATED AIRFLOW, DENSITY, DEW POINT, AND THE ENTHALPY TO AN ACQUIRER | 76 |

*FIG. 6*

80

| RECEIVING HUMIDITY, AIRFLOW, DEW POINT, DENSITY AND TEMPERATURE MEASUREMENTS FOR AN AIRSTREAM AT A FIRST DEVICE | 82 |

↓

| CALCULATING DENSITY, DEW POINT AND ENTHALPY OF THE AIRSTREAM AT THE FIRST DEVICE | 84 |

↓

| COMMUNICATING THE HUMIDITY, AIRFLOW, TEMPERATURE, DEW POINT, DENSITY AND ENTHALPY TO A SECOND DEVICE VIA THE FIRST DEVICE | 86 |

*FIG. 7*

```
 O CFM          76.1 F
61.8 F    DPT  61%RH
```

FIG. *8*

```
 O CFM          76.1 F
31   Btu/1b      61%RH
```

FIG. *9*

Velocity-weighted Temperature Example
Supply Air or Mixed Air Temperature

FIG. 10

EP 4 081 741 B1

# Velocity-weighted Temperature

Using Averages:
(incorrect)
55 °F

Using Weighted Avg.
(actual)
56.7° F

FIG. 11

EP 4 081 741 B1

# Velocity-weighted Temperature Example
## Fixed Dry-bulb Economizer Switchover

SUN

FIG. 12

# Velocity-weighted Temperature Example
## Fixed Dry-bulb Economizer Switchover

**Using Avg. Temp:**
**75 °F**

ECONOMIZING

**Using Weighted Temp**
**(Actual)**
**76.3° F**

NOT ECONOMIZING

5,000 CFM
80° F

3,000 CFM
70° F

Temperature
Sensor for
Mixed
70° F

ECONOMIZING

## FIG. 13

# Velocity-weighted Enthalpy Example
## Fixed Enthalpy with Fixed Dry-bulb Economizer Switchover

SUN

EP 4 081 741 B1

FIG. 14

# Velocity-weighted Enthalpy Example
## Fixed Enthalpy with Fixed Dry-bulb Economizer Switchover

**Using Avg. Temp:**
75 °F, 48.5% RH
27.8 Btu/lb

ECONOMIZING

**Using Weighted Temp (Actual)**
76.3° F, 46.5% RH
28.2 Btu/lb

NOT ECONOMIZING

EP 4 081 741 B1

# FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019017717 A